(19) Europäisches Patentamt
European Patent Office
Office européen des brevets

(11) Publication number: **0 095 948 B1**

(12) **EUROPEAN PATENT SPECIFICATION**

(45) Date of publication of patent specification: **23.01.91**

(51) Int. Cl.^5: **G 01 V 9/04**

(21) Application number: **83303197.4**

(22) Date of filing: **02.06.83**

(54) **Detecting article edges.**

(30) Priority: **02.06.82 JP 93046/82**
**14.07.82 JP 121292/82**
**26.03.83 JP 50642/83**

(43) Date of publication of application:
**07.12.83 Bulletin 83/49**

(45) Publication of the grant of the patent:
**23.01.91 Bulletin 91/04**

(84) Designated Contracting States:
**DE FR GB**

(56) References cited:
**DE-A-2 824 849**
**GB-A-2 023 282**
**US-A-3 396 278**
**US-A-3 456 155**
**US-A-4 266 124**
**US-A-4 298 807**

**PATENTS ABSTRACTS OF JAPAN, vol. 7, no. 32 (P-174)1177r, 8th February 1983; & JP-A-57 186 186 (INOUE DENSHI K.K.) 16-11-1982**

(73) Proprietor: **FUJITSU LIMITED**
**1015, Kamikodanaka Nakahara-ku**
**Kawasaki-shi Kanagawa 211 (JP)**

(72) Inventor: **Igaki, Seigo**
**474-59-103, Hirao**
**Inagi-shi Tokyo 206 (JP)**
Inventor: **Nakakuki, Tadao**
**4-6-7, Shirogane**
**Minato-ku Tokyo 108 (JP)**
Inventor: **Inagaki, Takefumi**
**1341-75, Ozenji Asao-ku**
**Kawasaki-shi Kanagawa 215 (JP)**
Inventor: **Oikawa, Shuetsu**
**Dai-2 Miyama-so, 1089 Kamiasao**
**Asao-ku Kawasaki-shi Kanagawa 215 (JP)**
Inventor: **Fujimura, Takashi**
**1-13-11, Nishihara**
**Shibuya-ku Tokyo 151 (JP)**

(74) Representative: **Fane, Christopher Robin King et al**
**HASELTINE LAKE & CO. Hazlitt House 28 Southampton Buildings Chancery Lane London, WC2A 1AT (GB)**

**EP 0 095 948 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to detecting article edges, for example the edges of a planar article, and may be applicable to an automatic teller machine for use in distinguishing between items of paper currency by determining their widths.

An apparatus for detecting the position of an edge of an article may employ mutually opposed first and second parallel linear arrays of radiation sources and radiation sensors respectively, disposed so as to extend transversely across the edge to be detected. In such an apparatus, each radiation sensor is directly opposed to a corresponding radiation source, and the position of an edge is determined by the number of darkened sensors in the second array. Measurement of the width of an article may be effected in this manner by employing linear arrays that extend across two opposite side edges of the article concerned. Such an apparatus is disclosed in DE—A—2 824 849.

However, in such an apparatus the measurement resolution is determined by the number of sensors per unit width so that an increase in resolution requires the provision of more sources and sensors, spaced apart by a smaller distance. This has the disadvantages of increased cost and complexity, and in addition the physical dimensions of the source and sensor devices employed restrict the extent to which the spacing may be reduced.

A known technique for reducing the overall number of sensors required whilst maintaining measurement resolution is disclosed in US 3,396,278. In a measurement device disclosed therein, the sensors are arranged linearly in two successive groups, the sensors of the first such group being spaced uniformly apart by a first distance (corresponding to the desired resolution), and the sensors of the second such group being spaced apart by a larger distance that is an integral multiple of the spacing of the sensors of the first group. The first and second groups are themselves spaced apart by a predetermined distance so as to extend respectively over the opposite ends of an article, such as a log, whose length is to be measured. When the forward end of a log travelling along the groups, between the sensors and opposed sources, blocks off light to one of the sensors of the second group, this triggers the sensors of the first group to detect the rearward end of the log, so that the length of the log is determined with a resolution corresponding to the spacing of the sensors of the first group. However, the resolution is still restricted by the spacing of the latter sensors.

According to one aspect of the present invention, there is provided an apparatus, including mutually opposed first and second parallel linear arrays of radiation sources and radiation sensors respectively, for detecting the position of an edge of an article inserted in the space between the two arrays so that the arrays extend transversely across that edge, which apparatus further includes source selection means connected with the radiation sources for causing them to emit radiation one after another in a pre-determined sequence, and sensor selection means connected with the radiation sensors for activating them, to be responsive to such radiation, one after another in a sequence corresponding to the said pre-determined sequence so that the radiation sensors and sources are employed as a set of source/sensor pairs which supply respective signals in sequence to discrimination means for detecting a reduction in the intensity received by each sensor in turn, from the corresponding source, as compared with a situation in which the space between the two arrays is empty, the first and second arrays being offset longitudinally with respect to one another so that each of the said radiation sensors is located between the respective emission axes of an associated pair of mutually-adjacent sources of the said first array, and the said source selection means and the said sensor selection means being such that during the course of the said pre-determined sequence each of the said radiation sensors is activated at two different times, at which times the sources of the said associated pair are activated respectively.

According to a second aspect of the present invention there is provided a method of employing mutually opposed first and second parallel linear arrays of radiation sources and radiation sensors to detect the position of an edge of an article inserted in a space between the two arrays so that the arrays extend transversely across that edge, wherein the radiation sources are activated to emit radiation one after another in a pre-determined sequence, and the radiation sensors are activated, to be responsive to such radiation, one after another in a sequence corresponding to the said predetermined sequence so that the radiation sources and sensors are employed as a set of source/sensor pairs which supply respective signals in sequence to discrimination means serving to detect whether the intensity of radiation received by each sensor in turn from the corresponding source is reduced by more than a predetermined extent as compared with a situation in which the space between the two arrays is empty, the first and second arrays being offset longitudinally with respect to one another so that each of the said radiation sensors is located between the respective emission axes of an associated pair of mutually-adjacent sources of the said first array, and wherein during the course of the said predetermined sequence each of the said radiation sensors is activated at two different times, at which times the sources of the said associated pair are activated respectively.

An embodiment of the invention can provide substantially improved resolution as compared with the above-discussed prior art.

It has been noted, incidentally that sequential activation of source/sensor pairs arranged linearly to provide a so-called "light-curtain", for detecting the intrusion of an operator's hand, for example, into the vicinity of a potentially-dangerous machine tool, is known from GB—A—2 023 282 and US 4,266,124, but the arrangements discussed therein are not designed to detect the position of an edge of an intruding article, and the opposed arrays are not offset from one another longitudinally.

Articles whose widths are to be meaured may exhibit considerable variation in thickness, design, colour and quality. Such variation may affect the intensity of radiation passing through the article. Furthermore, the intensity of radiation emitted by the radiation sources may vary with time and temperature.

An embodiment of the present invention should preferably operate reliably irrespective of such variation in radiation intensity. To this end, in one embodiment of the present invention the discrimination means operates by calculating, for each of the said source/sensor pairs, the ratio of the respective intensities received by the sensor before and after insertion of an article and determining in each case whether the calculated ratio has a value of less than 1, indicating that the inserted article extended between the sensor concerned and its associated source.

Reference will now be made, by way of example, to the accompanying drawings in which:

Figure 1 is a schematic view of a conventional apparatus for detecting opposite edges of a flat article;

Figure 2 is a graph illustrating the operation of the apparatus of Figure 1;

Figure 3 is a schematic view of part of another conventional apparatus for detecting an edge of a flat article;

Figure 4 is a graph illustrating the operation of the apparatus of Figure 3;

Figure 5 is a block diagram of part of another apparatus, not according to the present invention, for detecting opposite edges of a flat article;

Figure 6 is a block diagram of a light source selecting circuit for use in the apparatus of Figure 5;

Figure 7 is a block diagram of a photosensor selecting circuit for use in the apparatus of Fig. 5;

Figures 8, 9 and 10 show graphs illustrating the operation of the apparatus of Figure 5;

Figure 11 is a block diagram of an apparatus for use to detect opposite edges of a flat article in accordance with a first embodiment of the present invention;

Figure 12 is a timing-chart explaining the operation of the apparatus of Figure 11;

Figure 13 is a graph illustrating the operation of the apparatus of Figure 11;

Figure 14 is a diagram illustrating a modified form of part of the apparatus of Figure 11;

Figure 15 is a block diagram of a part of an apparatus for use to detect opposite edges of a flat article in accordance with a further embodiment of the present invention; and

Figures 16A, 16B and 16C are flow charts explaining the operation of the apparatus shown in Fig. 15.

Figure 1 is a diagram of an apparatus in which light sources 2a and 2b and photosensors 3a and 3b are arranged facing each other. A paper article 1, for example paper currency, is passed therebetween. The light sources 2a and 2b are driven by a driving circuit 4 so that they uniformly light up. The light received by the photosensor 3a and 3b in respective slit portions 3c and 3d is converted to an electric signal by pre-amplifiers 50 and 51.

When the paper 1 moves in the direction of the arrow shown in Figure 1, the light transmitted from the light sources 2a and 2b to the photosensors 3a and 3b is partially blocked. The greater the blocking of light, the smaller the detected output signal. The location of the edge of the paper is determined by comparing the magnitude of the output of the photosensor with a predetermined threshold value. By detecting the positions of the edges of the paper 1 by means of the photosensors 3a and 3b in this way, the width of the paper may be determined.

Figure 2 is a diagram illustrating the relationship between the position x of paper 1 and the output of the photosensor. In Figure 2, curve A shows the case where the paper is completely opaque, and curve B shows the case where the paper has the maximum expected transparency. Thus paper articles of intermediate transparencies produce curves in region C in Figure 2. Figure 2 shows a case where the length of the slit 3c is 20 mm, and the resolution for detecting the edge of the paper can be seen to be about ±2 mm. Further, at both end portions of the slit, such as $x<5$ mm or $x>15$ mm, the sensor output does not change linearly with the position x. Therefore, the edge of the paper cannot be precisely detected.

Figure 3 shows an apparatus in which a light source array is formed by a plurality of light sources 6a, and a photosensor array is formed by a plurality of photosensors 7a. The light sources 6a are activated simultaneously by a driving circuit 4a. The output of the photosensors 7a is supplied to a decode circuit 5a for conversion to an electrical signal.

Figure 4 is a diagram for explaining the resolution of the apparatus shown in Figure 3. In Figure 4, the output of a single photosensor 7a is shown as a function of the position x of the paper 1 assuming that seven light sources 6a are provided in a linear array a distance of 20 mm apart from the photosensor 7a and that the paper 1 is moved in the space between the linear array and the photosensor. As indicated in Figure 3, a similar output/position curve to that of Figure 2 is obtained. In the apparatus shown in Figure 3, the edge of the paper 1 cannot be detected when in between light-source-and-photosensor pairs, i.e., not directly between a light source and the directly opposed corresponding photosensor. This is because the photosensor 7a receives light from many light sources 6a.

In Figure 5, a light source array 12 formed by a plurality of light sources $L_1$ to $L_n$ such as light emitting diodes which can be independently lit, and a photosensor array 13 formed by a plurality of

photosensors $PS_1$ to $PS_n$ such as phototransistors which may be independently activated, are arranged facing each other. Paper 11 is fed between them. A light source selecting circuit 16 is provided between the light source array 12 and a light source driving circuit 14 for independently activating the light sources $L_1$ to $L_n$ in the light source array 12. Further, a photosensor selecting circuit 17 is connected to the photosensor array 13 for independently activating the photosensors $PS_1$ to $PS_n$. A control circuit 18 supplies a selecting signal $S_1$ to the light source selecting circuit 16 and to the photosensor selecting circuit 17, and receives an output signal $S_2$ from the photosensor array 13. The control circuit shown in Figure 5 includes discrimination means formed by a control operation circuit 19, a memory circuit 20, an amplifier 21, an analog-to-digital (A/D) converter 22, an output circuit 23, and a signal bus 24.

A light source selecting circuit 16 for use in the apparatus of Figure 5 is shown in Figure 6. The selecting signal $S_1$ is applied to a signal discrimination circuit 25 which supplies gate signals to field effect transistors (FET) $FET_1$, $FET_2$, . . ., $FET_n$ used as switching elements. By switching on one of $FET_1$ to $FET_n$, the power supply potential $V_{CC}$ in the circuit 16 is supplied via the conducting FET to one of the light emitting diodes $LED_1$, $LED_2$, . . ., $LED_n$ connected in series with $FET_1$ to $FET_n$ so as to cause that LED to emit light.

A sensor selecting circuit 17 for use in the apparatus of Figure 5 is shown in Figure 7. In Figure 7, the collectors of phototransistors $PT_1$, $PT_2$, . . ., $PT_n$ in the photosensor array 13 are commonly connected via a resistor $R_2$ to the power supply potential $V_{CC}$ in the circuit 17. The emitters of the phototransistors $PT_1$ to $PT_n$ are respectively connected to resistors $r_1$, $r_2$, . . ., $r_n$. The other ends of the resistors $r_1$ to $r_n$ are grounded. The respective connection nodes between the resistors $r_1$ to $r_n$ and the emitters of the phototransistors $PT_1$ to $PT_n$ are connected to a switching circuit 26 in which a plurality of switching elements, such as analog switches, are provided. Because the switching circuit 26 receives the same selecting signal $S_1$ as the source selection circuit 16, the phototransistor directly facing an activated light emitting diode is activated to be responsive to light emitted by that activated diode, and an electric signal corresponding to the intensity of that light is delivered as the output signal $S_2$. The light emission diodes $LED_1$ to $LED_n$ in the light source array 12 and the phototransistors $PT_1$ to $PT_n$ are disposed in mutually opposed linear arrays with corresponding sensors and sources directly opposite to one another.

Operation of the apparatus shown in Figure 5 is as follows.

When there is no paper 1 between the light source array 12 and the sensor array 13, the signal $S_1$ which selects the first light source 12a in the light source array 12 and the first photosensor 13a in the photosensor array 13 is supplied via the signal bus 24 to the light source selecting circuit 16 and to the photosensor selecting circuit 17. This causes only the first light source 12a to be active. The light from the first light source 12a is received by the first photosensor 13a facing the first light source 12a. The received signal is converted to an electric signal which is then delivered from the photosensor selecting circuit as an output signal $S_2$.

The output $S_2$ from the photosensor selecting circuit 17 is amplified by the amplifier 21, is converted to a digital value in the A/D converter 22, and is supplied via the signal bus 24 to the control operation circuit 19. The signal supplied to the control operation circuit 19 is also stored in a predetermined region in the memory 20.

Similar operations to the above are repeated for successive source/sensor pairs, to complete a cycle of scanning from the first pair to the n'th pair so that data values corresponding to the intensities of light received by all of the photosensors in the photosensor array 13 when there is no paper 1 are stored in the memory 20.

When there is paper 1 between the light source array 12 and the photosensor array 13, similar operations to those performed when there is no paper 1 are repeated, and the data values given by the digitised received signals from the photosensors of the array 13 are stored in turn in the memory 20.

After the operations mentioned above are completed, the control operation circuit 19 determines for each source/sensor pair the ratio of the respective data values obtained before and after insertion of the paper 1. A ratio of about "1" indicates that there is no paper between the light source array 12 and the photosensor array 13 at the position of the pair concerned. A ratio lower than "1" indicates that there is paper at the position concerned, the light emitted from the light source being absorbed by the paper so that the sensor output is attenuated.

In Figure 5, light source array 12 and the sensor array 13 are shown only for the right edge of the paper, but it will be appreciated that similarly operated arrays are provided for detecting the left edge of the paper.

Since the distance between the right-hand and the left-hand photosensor arrays 13, and the pitch of the photosensors in the photosensor arrays 13, are predetermined the control operation circuit 19 can calculate the width of the paper present. The result of the calculation is supplied via the output circuit 23 to further apparatus (not shown) as an output signal $S_0$.

In the operations above it is assumed that errors or variations in the characteristics of the amplifier 21, and quantisation errors or other variations in the characteristics of the A/D converter 22, are negligible.

Figure 8 shows the relation between the photosensor output and the position of the paper 11 in the apparatus shown in Fig. 5, when light emitting diodes TLN-104 (20 mA) and phototransistors TPS-606 (both manufactured by Toshiba Ltd.) are used as the light sources 12 and photosensors 13 and the distance between the opposed faces thereof is 20 mm. As shown in Fig. 8, the measuring resolution is considerably increased in comparison with Fig. 4. In Fig. 9 results according to Fig. 8 are shown superimposed on results according to Fig. 4.

Figure 10 shows the relation of the light source array 12 and the position of the paper 11 in the apparatus shown in Fig. 5. For each edge of the paper, the obtained resolution is about ±1.25 mm, the pitch of the source and sensor arrays being 2.5 mm.

As shown in Fig. 10, the readings from each source/sensor pair vary due to differences in the light output of the light sources and the sensitivity of the photosensors. However, this variation is no problem because, in the Figure 5 apparatus, the presence or absence of paper is judged on the basis of the ratio of the light intensity received before and after insertion of the paper between each pair, rather than on the basis of the absolute value of the received light intensity after insertion.

Further, even if light sources in which the light amount decreases relatively with time, such as incandescent lamps, are used, the accuracy with which the edge of the paper can be detected is substantially unimpaired, because of the above-mentioned use of a ratiometric test rather than an absolute-value test.

Since the respective intensities before and after insertion of paper are always considerably different, the above-mentioned ratiometric test, using digital values corresponding to these respective intensities, can give reliable detection results for paper articles of widely differing quality and surface design.

In the apparatus of Fig. 5, the position of the paper edge can be detected with a resolution corresponding to the pitch of the photosensors in the photosensor array 13. Further, in the apparatus of Fig. 5, the electric current supplied by the light source driving circuit can be decreased to the amount consumed by one light source.

Figure 11 illustrates a first embodiment of the present invention.

In the apparatus shown in Fig. 11, the photosensor array 13′ is offset longitudinally by half a pitch with respect to the light source array 12, so that each sensor is located between the respective emission axes of an associated pair of mutually-adjacent sources in the array 12. The other elements are the same as those of Fig. 5, except for the control operation circuit 19a.

Figure 12 is a time chart showing the operation of the apparatus of Fig. 11 when there are 10 light sources in the light source array 12 and 10 photosensors in the photosensor array 13′. Selection signals $S_3$, shown at $S_{30}$ to $S_{39}$ in Fig. 12, are supplied in a predetermined sequence to the light sources, and selection signals S4, shown at $S_{40}$ to $S_{49}$, are supplied in a corresponding sequence to the photosensors.

When the control operation circuit 19a in the control circuit 18a receives a start signal St (Fig. 12) and a paper pass signal Sm, a logic gate signal Sg is set to logic "0" after a predetermined time TD (this operation is also carried out in the apparatus shown in Fig. 5).

The control operation circuit 19a first supplies a selection signal $S_{30}$ to the light source selecting circuit 16, for illuminating the first light source, and a selection signal $S_{40}$ to the photosensor selecting circuit 17, for activating the first photosensor. After the output of the first photosensor is stored in the memory 20, similar operations are repeated for successive source/sensor pairs, finishing with the 10th light source and the 10th photosensor.

Next, a similar operation is carried out for the pair constituted by the second light source and the first photosensor, then for the pair constituted by the third light source and the second photosensor, and so on, finishing with the pair constituted by the 10th light source and the ninth photosensor.

In the scanning operation described above, each photosensor except for the 10th photosensor is activated at two different times, at which times the sources of the associated pair are activated respectively. For example, the fifth light sensor ($S_5$) is activated at one time with the fifth light source ($L_5$) and at another time with the sixth light source ($L_6$).

For each of the source/sensor pairs, the signal received when the paper is inserted is divided by the signal received before the paper was inserted so that the edge of the paper concerned can be detected substantially as described with reference to Fig. 5.

In the apparatus shown in Fig. 11, the photosensors are shifted half a pitch relative to the light sources so that each photosensor receives light, at different respective times, from two light sources. In this way the accuracy with which the edge of the paper can be detected is doubled (i.e. the resolution is halved) as illustrated in Fig. 13. For each edge, the obtained resolution is about ±0.625 mm, the pitch of the sensors being 2.5 mm.

In the apparatus shown in Fig. 11, numerous variations can be effected. The sequences in which the light sources and sensors are activated may be altered so that, for instance, a pair consisting of the first photosensor with the first light source is activated first, then a pair consisting of the first photosensor with the second light source, then the second photosensor with the second light source, then the second photosensor with the third light source, and so on.

Figure 14 illustrates an arangement that can give twice the detecting accuracy of the apparatus shown in Fig. 11. Figure 14 shows the arrays 12 and 13′ at both edges of the paper, and illustrates the relationship between the pitch of each of the light source arrays 12 and photosensor arrays 13′ and the width l of the narrowest paper article to be measured. In Fig. 14, a and b denote left and right standard measuring points, adjacent to the respective outermost sensors of the left-hand and right-hand sensor arrays 13′, L denotes the distance between the left and right standard measuring points, and P denotes the pitch of the light source arrays and photosensor arrays.

In this embodiment, where $\Delta l$ is a predetermined standard increment in width of a range of wider pieces of paper to be detected, the pitch P is chosen to be such that

$$P = \frac{\Delta l}{n}$$

(where n is an integer preferably greater than 2), for each expected value of width difference as compared with l.

If L is then set such that

$$L = (l + mP) \pm \frac{P}{4},$$

where m is an integer which must be equal to or greater than 1 but is preferably a relatively large number, then the detecting accuracy of the position of the paper is improved. Thus, by making the distance L differ from the sum of the expected minimum width l and an integral multiple of the pitch P (selected as indicated above) by one fourth of the pitch P, the measuring accuracy of the feeding position can be improved by an amount equal to one-fourth of the pitch ($\pm\frac{1}{8}$ pitch) of each array.

In the apparatus of Fig. 11, as in that of Fig. 5, the analog outputs of the photosensor array 13' are converted by the A/D converter 22 into digital signals. However, the operating speed of the A/D converter 22 may be slower than that of the light source selecting circuit 16 or the photosensor selecting circuit 17, so that the overall operating speed of the apparatus is restricted by the speed of the A/D converter 22.

In contrast, in the apparatus shown in Fig. 15 a digital-to-analog (D/A) converter 30 is provided before the light source driving circuit 14, an analog comparator 32 is provided at the output of the amplifier 21, and the A/D converter of Figs. 5 and 11 is eliminated. A control data memory 34 is provided for controlling operational timings. The operation of the apparatus shown in Fig. 15 is a similar to the apparatus shown in Fig. 11 in the scanning of each light source array 12 and each photosensor array 13', but the output current of the light source driving circuit 14 is controlled by the D/A converter 30.

Next, the operation of the apparatus shown in Fig. 15 will be explained by referring to the flow charts of Fig. 16A, 16B, and 16C. As shown in Fig. 16A, the operation of the apparatus comprises a calibration process and a measuring process. The former is shown in detail in Fig. 16B, and the latter is shown in detail in Fig. 16C.

In the calibration process, under the control of the control circuit 19a the light source selecting circuit 16 and the photosensor selecting circuit 17 scan the light source array 12 and the photosensor array 13' before a paper article 11 is inserted in the space between the arrays. The output of the photosensor array 13' is supplied via an amplifier 21 to the analog comparator 32.

In the analog comparator 32, three preselected reference levels $SL_1$, $SL_2$ and $SL_3$, having the relationship $SL_1 > SL_2 > SL_3$, where $SL_1 \approx SL_2$, are provided. In the calibration process the output Sx of the amplifier when the photosensor array 13' is scanned is compared, for each light source in turn, with the first two reference levels, and the control circuit 19a establishes a control signal, supplied to the D/A converter 30 to set the output current of the light source driving circuit 14, such that the output Sx of the amplifier is brought into accordance with the relationship $SL_1 \geq Sx \geq SL_2$, whereupon the control signal established for the light source concerned is stored in a light amount compensation memory 33. This calibration is carried out for all light sources in the light source array 16, as shown in Fig. 16B.

During a subsequent measuring procedure, with paper 11 inserted, when the photosensor array is scanned the output Sx of the amplifier 21 is compared, for each sensor when activated, with the third reference value $SL_3$ in the analog comparator 32. When $SL_3 < Sx$, a digital signal "1" is output, and the control circuit 19a judges that there is no paper at the position of the photosensor concerned. When $SL_3 > Sx$, a digital signal "0" is output, and the control circuit 19a judges that there is paper at the position of the photosensor. This test is carried out for all pairs of the array as shown in Fig. 16C.

In the above-described operation, the light intensity of each light source is controlled by an individually preset control signal, stored in the light amount compensation memory 33. Thus, the value of Sx is normalized by virtue of the adjustment, prior to the insertion of the paper, to satisfy the condition $SL_1 \geq Sx \geq SL_2$. Effects due to variation of the light source intensity, temperature, or sensitivity of the photosensor can thereby substantially eliminated. Preferably, in the apparatus shown in Fig. 15, the value $SL_3$ is set as

$$SL_3 = \frac{1}{2} SL_2.$$

Because the apparatus shown in Fig. 15 requires no A/D converter, high speed operation is possible. Further, it is not necessary to provide program steps for sampling the output of an A/D converter and comparing the digital signal thereby obtained with a reference value stored in a memory. This can simplify the apparatus and facilitate processing at high speed.

## Claims

1. Apparatus including mutually opposed first and second parallel linear arrays (12, 13) of radiation sources (L) and radiation sensors (S) respectively, for detecting the position of an edge of an article (11) inserted in the space between the two arrays so that the arrays extend transversely across that edge, which apparatus further includes source selection means (16) connected with the radiation sources for activating them to emit radiation one after another in a pre-determined sequence, and sensor selection means (17) connected with the radiation sensors for activating them, to be responsive to such radiation, one after another in a sequence corresponding to the said pre-determined sequence so that the radiation sensors and sources are employed as a set of source/sensor pairs which supply respective signals in sequence to discrimination means (18a) for detecting a reduction in the intensity received by each sensor in turn, from the corresponding source, as compared with a situation in which the space between the two arrays is empty, the first and second arrays (12, 13') being offset longitudinally with respect to one another so that each of the said radiation sensors ($S_1$, $S_2$, . . .) is located between the respective emission axes of an associated pair ($L_1$—$L_2$, $L_2$—$L_3$, . . .) of mutually-adjacent sources of the said first array (12), and the said source selection means (16) and the said sensor selection means (17) being such that during the course of the said pre-determined sequence each of the said radiation sensors ($S_1$, $S_2$, . . .) is activated at two different times, at which times the sources of the said associated pair ($L_1$—$L_2$, $L_2$—$L_3$, . . .) are activated respectively.

2. Apparatus as claimed in Claim 1, wherein the said pre-determined sequence comprises a first sequence, in which each of the said radiation sources ($L_1$, $L_2$, $L_3$, . . .) is activated in turn along that array, commencing with a first source of that array (12), followed by a second sequence, in which the second and each subsequent source ($L_2$, $L_3$, . . .) is activated in turn along that array, the said corresponding sequence being such that each of the said sensors ($S_1$, $S_2$, $S_3$, . . .) is activated in turn along the second array (13) during each of the said first and second sequences.

3. Apparatus as claimed in Claim 1, wherein the source selection means and sensor selection means are such that a first radiation sensor ($S_1$) of the second array (13') is activated to be responsive to radiation from each in turn of the two sources of the associated pair ($L_1$, $L_2$) in the first array (12), whereafter the next sensor ($S_2$) of the second array is activated to be responsive to radiation from each in turn of the two sources ($L_3$) of the pair ($L_2$, $L_3$) associated with that next sensor in the first array, and so on along the arrays.

4. Apparatus as claimed in Claim 1, 2 or 3, including a control operation circuit (19a) and a signal bus (24) for supplying respective selection signals (S3, S4) to the said source selection means (16) and the said sensor selection means (17), an analog-to-digital converter circuit (22) for converting analog signals (S5) from the radiation sensors, corresponding to the intensities of radiation received thereby, to respective digital signals and for supplying those digital signals to the said control operation circuit (19a), and a memory (20) storing a set of respective digital signals, produced by the said analog-to-digital converter circuit in correspondence with the intensities of light received by the respective radiation sensors when the space between the said first and second arrays is empty, for comparison with signals produced when an article is inserted in the said space.

5. Apparatus as claimed in Claim 1, 2 or 3, including a control operation circuit (19a) and a signal bus (24) for supplying respective selection signals (S3, S4) to the said source selection means (16) and the said sensor selection means (17), a radiation amount compensation memory (33) storing respective control signals for controlling the current supplied to the individual radiation sources, a digital-to-analog converter circuit (30) for regulating the current supplied to the said radiation sources under the control of the said control operation circuit (19a) and in dependence upon the said respective control signals, and an analog comparator circuit (32) for comparing the output of each of the said radiation sensors with preselected analog reference levels ($SL_1$, $SL_2$, $SL_3$) to preset the said control signals, when the space between the said first and second arrays is empty, and subsequently to detect whether the said intensity received by each sensor is reduced by more than the said predetermined extent.

6. Apparatus as claimed in Claim 1, 2, 3 or 4, wherein the discrimination means operates by calculating, for each of the said source/sensor pairs, the ratio of the respective intensities received by the sensor before and after such insertion of an article, and determining in each case whether the calculated ratio has a value less than 1, indicating that the inserted article extended between the sensor concerned and its associated source.

7. Apparatus as claimed in any preceding claim, further comprising mutually opposed third and fourth parallel linear arrays of radiation sources and radiation sensors respectively, offset longitudinally with respect to one another in substantially the same manner as the first and second arrays, and provided with source selection means and sensor selection means connected for employing the third and fourth arrays, in a manner similar to that in which the first and second arrays are employed in accordance with Claim 1, for detecting the position of an opposite edge of such an article.

8. Apparatus as claimed in Claim 7, wherein the sources of each of the first and third arrays, and also the sensors of each of the second and fourth arrays, are spaced equally one from the next in the array by a pitch

$$P = \frac{\Delta l}{n},$$

where Δl is a pre-determined standard increment in distance between two opposite edges of a range of such articles to be dealt with, and n is an integer greater than 2, and the said second and fourth arrays are arranged so that their respective outermost sensors are spaced apart by a distance

$$L=l+mP\pm\frac{P}{4},$$

where l is the distance between the opposite edges of that article of the said range which has the minimum opposite-edge spacing, and m is an integer greater than or equal to 1.

9. A method of employing mutually opposed first and second parallel linear arrays (12, 13') of radiation sources (L) and radiation sensors (S) to detect the position of an edge of an article (11) inserted in a space between the two arrays so that the arrays extend transversely across that edge, wherein the radiation sources are activated to emit radiation one after another in a pre-determined sequence, and the radiation sensors are activated, to be responsive to such radiation, one after another in a sequence corresponding to the said predetermined sequence so that the radiation sources and sensors are employed as a set of source/sensor pairs which supply respective signals in sequence to discrimination means (18a) serving to detect whether the intensity of radiation received by each sensor in turn from the corresponding source is reduced by more than a predetermined extent as compared with a situation in which the space between the two arrays is empty, the first and second arrays (12, 13') being offset longitudinally with respect to one another so that each of the said radiation sensors ($S_1$, $S_2$, ...) is located between the respective emission axes of an associated pair ($L_1$—$L_2$, $L_2$—$L_3$, ...) of mutually-adjacent sources of the said first array (12), and wherein during the course of the said predetermined sequence each of the said radiation sensors ($S_1$, $S_2$, ...) is activated at two different times, at which times the sources of the said associated pair ($L_1$—$L_2$, $L_2$—$L_3$, ...) are activated respectively.

10. A method as claimed in Claim 9, wherein a radiation amount compensation memory (33) is employed to store respective control signals produced by comparing outputs (Sx) of the said radiation sensors ($S_1$, $S_2$, ...) with preselected analog reference levels ($SL_1$, $SL_2$) when the space between the first and second arrays (12, 13') is empty, whereafter the stored control signals are employed to regulate currents supplied respectively to activate the said radiation sources ($L_1$, $L_2$, ...), when the said article (11) is inserted, and respective outputs (Sx) of the said radiation sensors are compared with a further preselected analog reference level ($SL_3$) to provide a set of signals indicative of the said position.

11. A method as claimed in Claim 9 employing apparatus as claimed in any one of Claims 2 to 8.

**Patentansprüche**

1. Vorrichtung, einschließlich wechselseitig gegenüber angeordneter erster und zeiter paralleler linearer Felder (12, 13) von Strahlungsquellen (L) bzw. Strahlungssensoren (S), zum Detektieren der Position eines Randes eines Gegenstands (11), der in dem Raum zwischen den beiden Feldern angeordnet ist, so daß die Felder sich quer über jenen Rand erstrecken, welche Vorrichtung ferner eine Quellenauswahleinrichtung (16) umfaßt, die mit den Strahlungsquellen verbunden ist, um sie, eine nach der anderen in vorbestimmter Reihenfolge zum Emittieren von Strahlung zu aktivieren, und eine Sensorauswahleinrichtung (17), die mit den Strahlungssensoren verbunden ist, um sie, einen nach dem anderen in einer Reihenfolge, die der genannten vorbestimmten Reihenfolge entspricht, zu aktivieren, um auf solche Strahlung anzusprechen, so daß die Strahlungssensoren und -quellen als ein Satz von Quelle/Sensor-Paaren verwendet werden, welche jeweilige Signale der Reihe nach zu Diskriminierungseinrichtungen (18) senden, um eine Reduktion der Intensität zu detektieren, welche der Reihe nach von jedem Sensor von der entsprechenden Quelle empfangen wird, im Vergleich mit einer Situation, bei welcher der Raum zwischen den beiden Feldern leer, ist, wobei die ersten und zweiten Felder (12, 13') in Längsrichtung in Bezug aufeinander versetzt sind, so daß jeder der genannten Strahlungssensoren ($S_1$, $S_2$, ...) zwischen entsprechenden Emissionsachsen eines zugeordneten Paares ($L_1$—$L_2$, $L_2$—$L_3$, ...) von wechselseitig benachbarten Quellen des genannten ersten Feldes angeordnet ist, und die genannte Quellenauswahleinrichtung (16) und die genannte Sensorauswahleinrichtung (17) derart sind, daß während des Verlaufes der genannten vorbestimmten Sequenz jeder der Strahlungssensoren ($S_1$, $S_2$, ...) zu zwei verschiedenen Zeiten aktiviert wird, zu welchen Zeiten die Quellen des zugeordneten Paares ($L_1$—$L_2$, $L_2$—$L_3$, ...) jeweils aktiviert werden.

2. Vorrichtung nach Anspruch 1, bei der die genannte vorbestimmte Sequenz eine erste Sequenz umfaßt, bei der jede der genannten Strahlungsquellen ($L_1$, $L_2$, $L_3$, ...) der Reihe nach längs dem Feld aktiviert wird, beginnend mit einer ersten Quelle bei dem Feld (12), gefolgt von einer zweiten Sequenz, bei welcher die zweite und jede folgende Quelle ($L_2$, $L_3$, ...) der Reihe nach längs dem Feld aktiviert werden, wobei die genannte entsprechende Sequenz derart ist, daß jeder der genannten Sensoren ($S_1$, $S_2$, $S_3$, ...) der Reihe nach längs dem zweiten Feld (13) während jeder der ersten und zweiten Reihenfolgen aktiviert wird.

3. Vorrichtung nach Anspruch 1, bei der die Quellenauswahleinrichtung und die Sensorauswahleinrichtung derart sind, daß ein erster Strahlungssensor ($S_1$) des zweiten Feldes (13') aktiviert wird, um auf die Strahlung von jeder der aufeinander folgenden beiden Quellen des zugeordneten Paares ($L_1$, $L_2$) in dem ersten Feld (12) anspricht, woraufhin der nächste Sensor ($S_2$) des zweiten Feldes aktiviert wird, um der Reihe nach auf die Strahlung von jeder der beiden Lichtquellen ($L_3$) des Paares ($L_2$, $L_3$) anzusprechen, welches dem nächsten Sensor des ersten Feldes zugeordnet ist, und so weiter längs den Feldern.

4. Vorrichtung nach Anspruch 1, 2 oder 3, mit einer Betriebssteuerschaltung (19a) und einem Signalbus (24) zum Liefern entsprechender Auswahlsignale (S3, S4) an die genannte Quellenauswahleinrichtung (16) und die genannte Sensorauswahleinrichtung (17), einer Analog-zu-Digital-Wandlerschaltung (22), zum Konvertieren analoger Signale (S5) von den Strahlungsquellen, entsprechend den Intensitäten der dadurch empfangenen Strahlung, in entsprechende digitale Signale und zum Liefern jener digitalen Signale an die genannte Betriebssteuerschaltung (19a), und einem Speicher (20), welcher einen Satz der jeweiligen digitalen Signale speichert, die durch die genannte Analog-zu-Digital-Wandlerschaltung in Übereinstimmung mit den Intensitäten des Lichtes erzeugt werden, das durch die jeweiligen Strahlungssensoren empfangen wird, wenn der Raum zwischen dem genannten ersten und dem genannten zweiten Feld leer ist, zum Vergleich mit Signalen, die erzeugt werden, wenn ein Gegenstand in dem genannten Raum angeordnet ist.

5. Vorrichtung nach Anspruch 1, 2 oder 3, mit einer Betriebssteuerschaltung (19a) und einem Signalbus (24), zum Liefern entsprechender Auswahlsignale (S3, S4) an die genannte Quellenauswahleinrichtung (16) und die genannte Sensorauswahleinrichtung (17), einem Strahlungsbetragskompensationsspeicher (33), der entsprechende Steuersignale speichert, um den Strom zu steuern, der den individuellen Strahlungsquellen zugeführt wird, einer Digital-zu-Analog-Wandlerschaltung (30) zum Regeln des Stromes, der den genannten Strahlungsquellen unter Steuerung der genannten Betriebssteuerschaltung (19a) und in Abhängigkeit von den genannten entsprechenden Steuersignalen zugeführt wird, und einer analogen Komparatorschaltung (32) zum Vergleichen des Ausgangs von jedem der genannten Strahlungssensoren mit vorausgewählten analogen Referenzpegeln ($SL_1$, $SL_2$, $SL_3$), um die genannten Steuersignale voreinzustellen, wenn der Raum zwischen den genannten ersten und zweiten Feldern leer ist, und um daraufhin zu detektieren, ob die genannte Intensität, die von jedem Sensor empfangen wird, um mehr als jenen vorbestimmten Betrag reduziert ist.

6. Vorrichtung nach Anspruch 1, 2, 3 oder 4, bei der die Diskriminierungseinrichtung durch Berechnen, für jedes der genannten Quelle/Sensor-Paare, des Verhältnisses der jeweiligen Intensität, die von dem Sensor empfangen werden, vor und nach Einfügen eines Gegenstands, und Bestimmen, in jedem Falle, ob das berechnete Verhältnis einen Wert kleiner als 1 hat, welcher anzeigt, daß der eingefügte Gegenstand sich zwischen dem betreffenden Sensor und seiner zugeordneten Quelle erstreckte.

7. Vorrichtung nach einem der vorhergehenden Ansprüche, ferner mit wechselseitig entgegengesetzten dritten und vierten parallelen linearen Feldern von Strahlungsquellen bzw. Strahlungssensoren, die in Längsrichtung in Bezug aufeinander im wesentlichen in derselben Weise wie die ersten und zweiten Felder versetzt sind, und die mit einer Quellenauswahleinrichtung und einer Sensorauswahleinrichtung versehen sind, die verbunden sind, um die dritten und vierten Felder zu benutzen, in einer ähnlichen Weise wie die ersten und zweiten Felder gemäß Anspruch 1 verwendet werden, um die Position eines gegenüberliegenden Randes von solch einem Gegenstand zu detektieren.

8. Vorrichtung nach Anspruch 7, bei der die Quellen von jedem der ersten und dritten Felder, und auch die Sensoren von jedem der zweiten und vierten Felder, gleichmäßig eine von der anderen in dem Feld mit einem Abstand

$$P=\frac{\Delta l}{n}$$

angeordnet sind, wobei $\Delta l$ ein vorbestimmter Standardzuwachs im Abstand zwischen gegenüberliegenden Rändern von einem Bereich von solchen Gegenständen, mit denen gearbeitet wird, ist, und n eine ganze Zahl größer als 2 ist, und die genannten zweiten und vierten Felder so angeordnet sind, daß ihre entsprechenden äußersten Sensoren voneinander um einen Abstand

$$L=1+mP\pm\frac{P}{4}$$

ist, wobei l der Abstand zwischen den gegenüberliegenden Rändern von jenem Gegenstand von dem genannten Bereich ist, der den minimalen Rand-zu-Rand-Abstand hat, und m eine ganze Zahl größer oder gleich 1 ist.

9. Verfahren zur Verwendung wechselseitig gegenüberliegender erster und zweiter paralleler linearer Felder (12, 13') von Strahlungsquellen (L) und Strahlungssensoren (S), um die Position eines Randes eines Gegenstands (11) zu detektieren, der in einem Raum zwischen zwei Feldern eingefügt ist, so daß die Felder sich quer zu jenem Rand erstrecken, wobei die Strahlungsquellen aktiviert werden, um, eine nach der anderen in vorbestimmter Reihenfolge, Strahlung zu emittieren, und die Strahlungssensoren aktiviert werden, um, eine nach der anderen in einer Reihenfolge, die der genannten vorbestimmten Reihenfolge entspricht, auf solche Strahlung anzusprechen, so daß die Strahlungsquellen und die Sensoren als ein Satz von Quelle/Sensor-Paaren verwendet werden, welche der Reihe nach Signale an Diskriminierungseinrichtungen (18) liefern, die dazu dienen, zu detektieren, ob die Intensität der von jedem Sensor der Reihe nach von der entsprechenden Quelle empfangenen Intensität um mehr als einen vorbestimmten Betrag reduziert ist, im Vergleich mit einer Situation, in welcher der Raum zwischen den beiden Feldern leer ist, wobei die ersten und zweiten Felder (12, 13') in Längsrichtung in Bezug aufeinander so versetzt sind, daß jeder der genannten Strahlungssensoren ($S_1$, $S_2$, . . .) zwischen den entsprechenden Emissionsachsen von einem zugeordneten Paar ($L_1$—$L_2$, $L_2$—$L_3$, . . .) von wechselseitig benachbarten Quellen der genannten ersten Anordnung angeordnet ist, und wobei während des Verlaufes der genannten vorbestimmten Sequenz jeder der Strahlungssensoren ($S_1$, $S_2$, . . .) zu zwei verschiedenen Zeiten aktiviert wird, zu welchem Zeiten die Quellen des genannten zugeordneten Paares ($L_1$—$L_2$, $L_2$—$L_3$, . . .) jeweils aktiviert werden.

10. Verfahren nach Anspruch 9, bei dem ein Strahlungsbetragskompensationsspeicher (33) verwendet wird, um die entsprechenden Steuersignale zu speichern, die durch Vergleich der Ausgänge (Sx) der genannten Strahlungssensoren ($S_1$, $S_2$, . . .) mit vorausgewählten analogen Referenzpegeln ($SL_1$, $SL_2$) erzeugt werden, wenn der Raum zwischen den ersten und zweiten Feldern (12, 13') leer ist, wonach die gespeicherten Steuersignale verwendet werden, um Ströme zu regeln, die jeweils geliefert werden, um die genannten Strahlungsquellen ($L_1$, $L_2$, . . .) zu aktivieren, wenn der genannte Gegenstand (11) eingefügt ist, und entsprechende Ausgänge (Sx) der genannten Strahlungssensoren mit einem weiteren vorausgewählten analogen Referenzpegel ($SL_3$) verglichen werden, um einen Satz von Signalen zu liefern, die die genannte Position anzeigen.

11. Verfahren nach Anspruch 9, unter Verwendung einer Vorrichtung nach einem der Ansprüche 2 bis 8.

**Revendications**

1. Appareil, comprenant une première matrice linéaire et une seconde matrice linéaire (12, 13), opposées et parallèles l'une à l'autre, formées de sources (L) d'un rayonnement et de capteurs (S) d'un rayonnement respectivement, destiné à la détection de la position d'un bord d'un article (11) introduit dans l'espace compris entre les deux matrices afin que les matrices soient disposées transversalement au bord, l'appareil comprenant en outre un dispositif (16) de sélection de source connecté aux sources du rayonnement et destiné à les activer afin qu'elles émettent un rayonnement les unes après les autres avec une séquence prédéterminée, et un dispositif (17) de sélection de capteur connecté aux capteurs d'un rayonnement afin qu'il les active, et qu'ils soient sensibles au rayonnement, les uns après les autres, avec une séquence correspondant à la séquence prédéterminée de manière que les capteurs et les sources soient utilisés comme un jeu de paires source-capteur qui transmettent des signaux respectifs successivement à un dispositif de discrimination (18a) destiné à détecter une réduction de l'intensité reçue par chaque capteur tour à tour, de la source correspondante, par comparaison avec le cas dans lequel l'espace entre les deux matrices est vide, la première et la seocnde matrice (12, 13') étant décalées longitudinalement l'une par rapport à l'autre afin que chacun des capteurs d'un rayonnement ($S_1$, $S_2$, . . .) soit placé entre les axes respectifs d'émission d'une paire de sources associées ($L_1$—$L_2$, $L_2$—$L_3$, . . .) qui sont adjacentes dans la première matrice (12), et le dispositif (16) de sélection de source et le dispositif (17) de sélection de capteur sont tels que, pendant ladite séquence prédéterminée, chacun des capteurs d'un rayonnement ($S_1$, $S_2$, . . .) est activé à deux moments différents auxquels les sources de la paire associée ($L_1$—$L_2$, $L_2$—$L_3$, . . .) sont activées respectivement.

2. Appareil selon la revendication 1, dans lequel la séquence prédéterminée comprend une première séquence dans laquelle chacune des sources d'un rayonnement ($L_1$, $L_2$, $L_3$, . . .) est activée tour à tour le long de la matrice, à partir d'une première source de cette matrice (12), puis une seconde séquence au cours de laquelle la seconde source et chaque source suivante ($L_2$, $L_3$, . . .) sont activées à leur tour le long de la matrice, la séquence correspondante étant telle que chacun des capteurs ($S_1$, $S_2$, $S_3$, . . .) est activé tour à tour le long de la seconde matrice (13) pendant chacune des première et seconde séquences.

3. Appareil selon la revendication 1, dans lequel le dispositif de sélection de source et le dispositif de sélection de capteur sont tels qu'un premier capteur de rayonnement ($S_1$) de la seconde matrice (13') est activé afin qu'il soit sensible au rayonnement de chacune des deux sources de la paire associée ($L_1$, $L_2$), de la première matrice (12), tour à tour, et le capteur suivant ($S_2$) de la seconde matrice est ensuite activé afin qu'il soit sensible au rayonnement de chacune des deux sources ($L_3$) de la paire ($L_2$, $L_3$) associée à ce capteur suivant, dans la première matrice, tour à tour, et ainsi de suite le long des matrices.

4. Appareil selon la revendication 1, 2 ou 3, comprenant un circuit d'opération de commande (19a) et un bus (24) de signaux destinés à transmettre des signaux respectifs de sélection ($S_3$, $S_4$) au dispositif (16) de sélection de source et au dispositif (17) de sélection de capteur, un circuit convertisseur analogique-numérique (22) destiné à transformer les signaux analogiques ($S_5$) des capteurs d'un rayonnement, correspondant aux intensités du rayonnement reçues par ces capteurs, en signaux numériques respectifs, et à transmettre ces signaux numériques au circuit d'opération de commande (19a), et une mémoire (20) conservant un ensemble de signaux numériques respectifs, produits par le circuit convertisseur analogique-numérique d'une manière qui correspond aux intensités de la lumière reçue par les capteurs respectifs d'un rayonnement lorsque l'espace compris entre la première et la seconde matrice est vide, afin qu'ils soient comparés aux signaux produits lorsqu'un article est introduit dans cet espace.

5. Appareil selon la revendication 1, 2 ou 3, comprenant un circuit d'opération de commande (19a) et un bus (24) de signaux destinés à transmettre des signaux respectifs de sélection ($S_3$, $S_4$) au dispositif (16) de sélection de source et au dispositif (17) de sélection de capteur, une mémoire (33) de compensation de quantité d'un rayonnement conservant des signaux respectifs de réglage du courant transmis aux sources individuelles d'un rayonnement, un circuit convertisseur numérique-analogique (30) destiné à régler le courant transmis aux sources d'un rayonnement sous la commande du circuit d'opération de commande (19a) et en fonction des signaux respectifs de commande, et un circuit comparateur analogique (32) destiné à comparer le signal de sortie de chacun des capteurs d'un rayonnement à des niveaux analogiques prédéterminés de référence ($SL_1$, $SL_2$, $SL_3$) afin que les signaux de commande soient préréglés, lorsque l'espace compris entre la première et la seconde matrice est vide, et que, ultérieurement, le fait que l'intensité reçue par chaque capteur est réduite d'une quantité supérieure à l'étendue prédéterminée, soit détecté.

6. Appareil selon la revendication 1, 2, 3 ou 4, dans lequel le dispositif de discrimination fonctionne par calcul, pour chacune des paires source-capteur, du rapport des intensités respectives reçues par le capteur avant et après l'introduction de l'article, et par détermination, dans chaque cas, du fait que le rapport calculé a une valeur inférieure à 1 indiquant que l'article introduit se trouve entre le capteur concerné et la source associée.

7. Appareil selon l'une quelconque des revendications précédentes, comprenant en outre une troisième et une quatrième matrice linéaire qui sont parallèles et opposées et qui sont formées de sources et de capteurs respectifs d'un rayonnement, et décalées longitudinalement l'une par rapport à l'autre pratiquement de la même manière que la première et la seconde matrice, et ayant un dispositif de sélection de source et un dispositif de sélection de capteur connectés de manière qu'ils utilisent la troisième et la quatrième matrice de la même manière que la première et la seconde matrice sont utilisées selon la revendication 1, afin que la position d'un bord opposé de l'article soit détectée.

8. Appareil selon la revendication 7, dans lequel les sources de chacune des première et troisième matrices, et les capteurs de chacune des seconde et quatrième matrices sont régulièrement espacés par rapport à l'élément suivant de la matrice avec un pas:

$$P=(\Delta l/n)$$

$\Delta l$ étant un incrément prédéterminé de référence de distance compris entre les bords opposés de toute une plage d'articles qui doivent être traités, et n étant un nombre entier supérieur à 2, la seconde et la quatrième matrice étant disposées de manière que leurs capteurs externes respectifs soient séparés par une distance:

$$L=l+mP\pm(P/4)$$

l étant la distance comprise entre les bords opposés de l'article de ladite plage qui a l'espacement minimal de bords opposés, et m étant un nombre entier supérieur ou égal à 1.

9. Procédé d'utilisation d'une première et d'une seconde matrice linéaire (12, 13') qui sont parallèles et opposées et qui sont formées de sources (L) d'un rayonnement et de capteurs (S) d'un rayonnement afin que la position d'un bord d'un article (11) introduit dans l'espace compris entre les deux matrices soient détectée, les matrices étant disposées transversalement audit bord, les sources du rayonnement étant activées afin qu'elles émettent un rayonnement les unes après les autres avec une séquence prédéterminée, et les capteurs du rayonnement étant activés afin qu'ils soient sensibles à ce rayonnement, les uns après les autres, avec une séquence correspondant à la séquence prédéterminée, si bien que les sources et les capteurs sont utilisés comme un ensemble de paires source-capteur qui transmettent respectivement des signaux successivement à un dispositif de discrimination (18a) dont le rôle est de détecter le fait que l'intensité du rayonnement reçu par chaque capteur à son tour à partir de la source correspondante est réduite de plus d'une amplitude prédéterminée par rapport au cas dans lequel l'espace compris entre les deux matrices est vide, la première et la seconde matrice (12, 13') étant décalées longitudinalement l'une par rapport à l'autre afin que chacun des capteurs ($S_1$, $S_2$, ...) soit disposé entre les axes respectifs d'émission d'une paire de sources adjacentes associées ($L_1$—$L_2$, $L_2$—$L_3$, ...) de la première matrice (12), et, pendant la séquence prédéterminée, chacun des capteurs ($S_1$, $S_2$, ...) est activé à deux moments différents auxquels les sources de la paire associée ($L_1$—$L_2$, $L_2$—$L_3$, ...) sont activées respectivement.

10. Procédé selon la revendication 9, dans lequel une mémoire (33) de compensation de quantité de rayonnement est utilisée pour la conservation de signaux respectifs de commande produits par comparaison des signaux de sortie ($S_x$) des capteurs d'un rayonnement ($S_1$, $S_2$, ...) à des niveaux analogiques prédéterminés de référence ($SL_1$, $SL_2$) lorsque l'espace compris entre la première et la seconde matrice (12, 13') est vide, et les signaux mémorisés de commande sont ensuite utilisés pour le réglage des courants transmis respectivement pour l'activation des sources d'un rayonnement ($L_1$, $L_2$, ...), lorsque l'article (11) est introduit, et les signaux respectifs de sortie (Sx) des capteurs d'un rayonnement sont comparés à un niveau analogique prédéterminé supplémentaire de référence ($SL_3$) afin qu'un ensemble de signaux représentatifs de cette position soit formé.

11. Procédé selon la revendication 9, réalisé par mise en oeuvre d'un appareil selon l'une quelconque des revendications 2 à 8.

Fig. 1

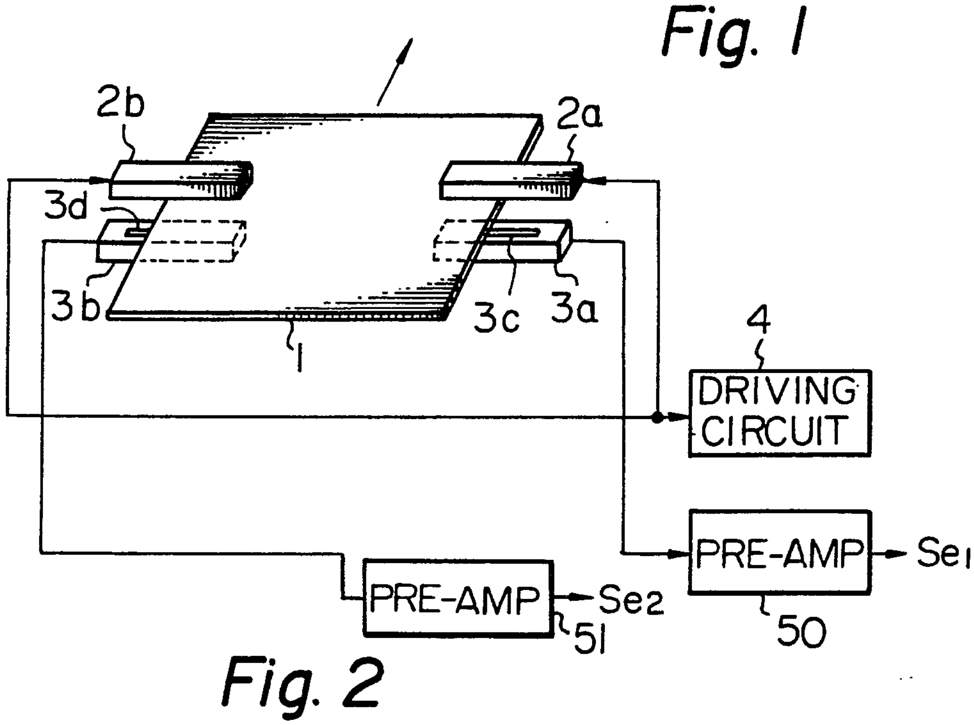
2b
2a
3d
3b
3c
3a
1
4
DRIVING CIRCUIT
PRE-AMP
Se1
50
PRE-AMP
Se2
51

Fig. 2

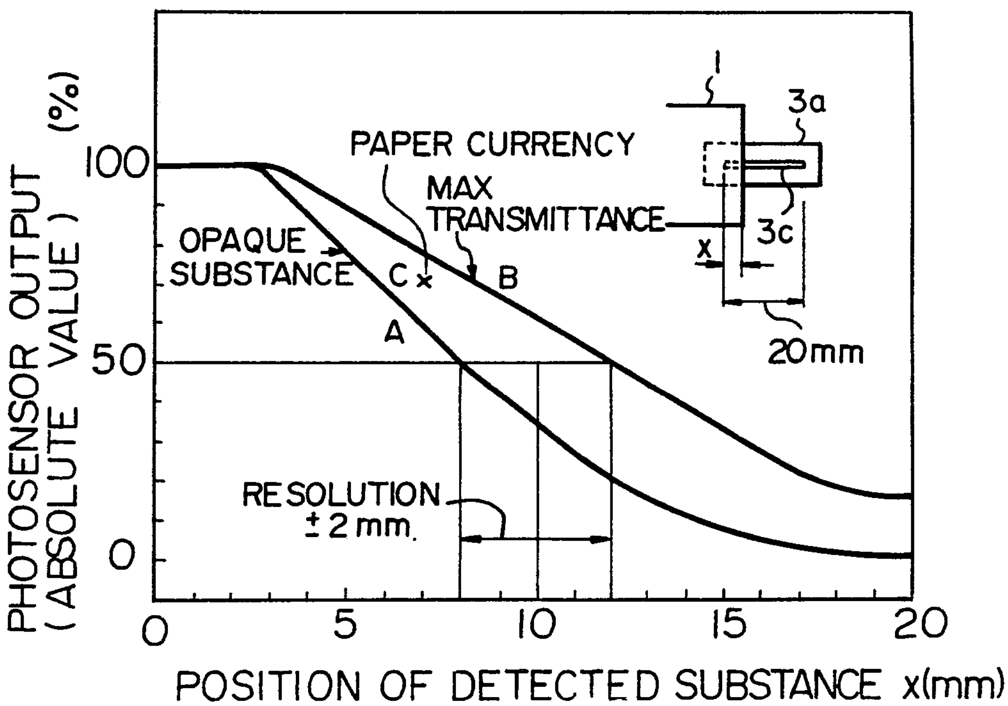
PHOTOSENSOR OUTPUT (ABSOLUTE VALUE) (%)
100
50
0
PAPER CURRENCY
MAX TRANSMITTANCE
OPAQUE SUBSTANCE
C
B
A
RESOLUTION ±2 mm
1
3a
3c
x
20mm
0
5
10
15
20
POSITION OF DETECTED SUBSTANCE x(mm)

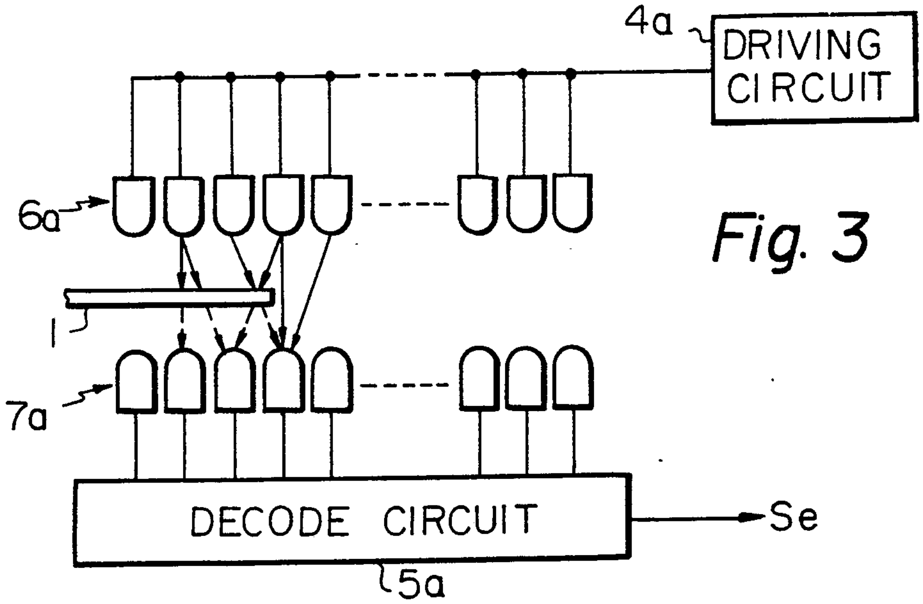
4a
DRIVING CIRCUIT
6a
1
7a
DECODE CIRCUIT
Se
5a

Fig. 3

Fig. 6

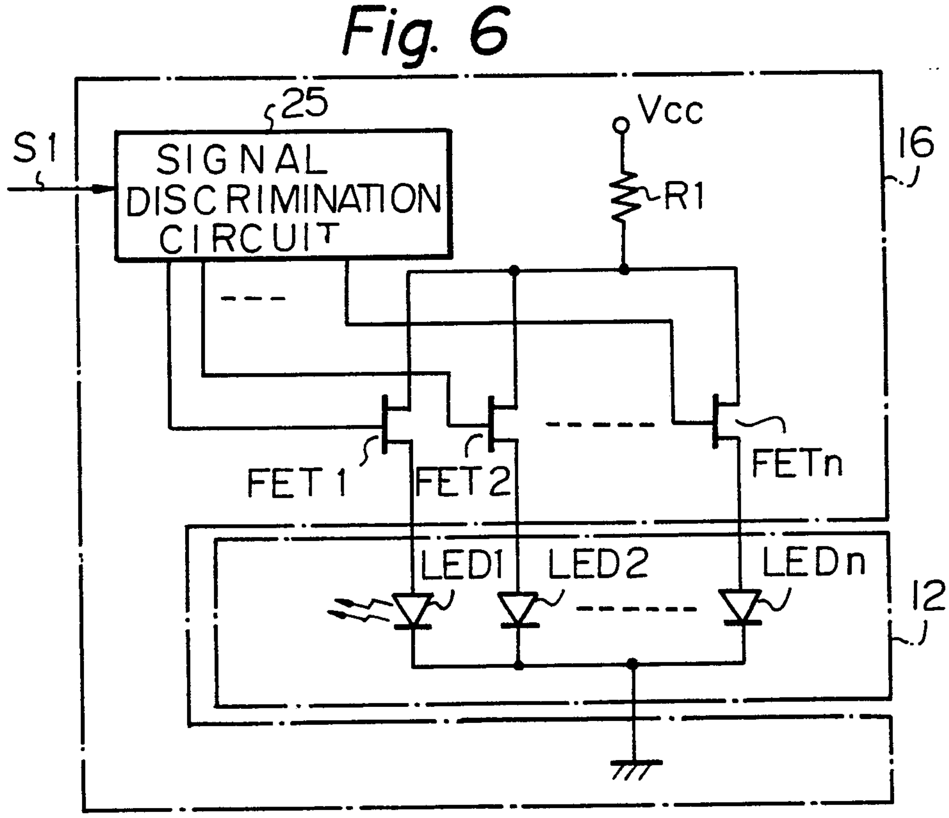
25
S1
SIGNAL DISCRIMINATION CIRCUIT
Vcc
R1
16
FET 1
FET 2
FETn
LED1
LED2
LEDn
12

Fig. 4

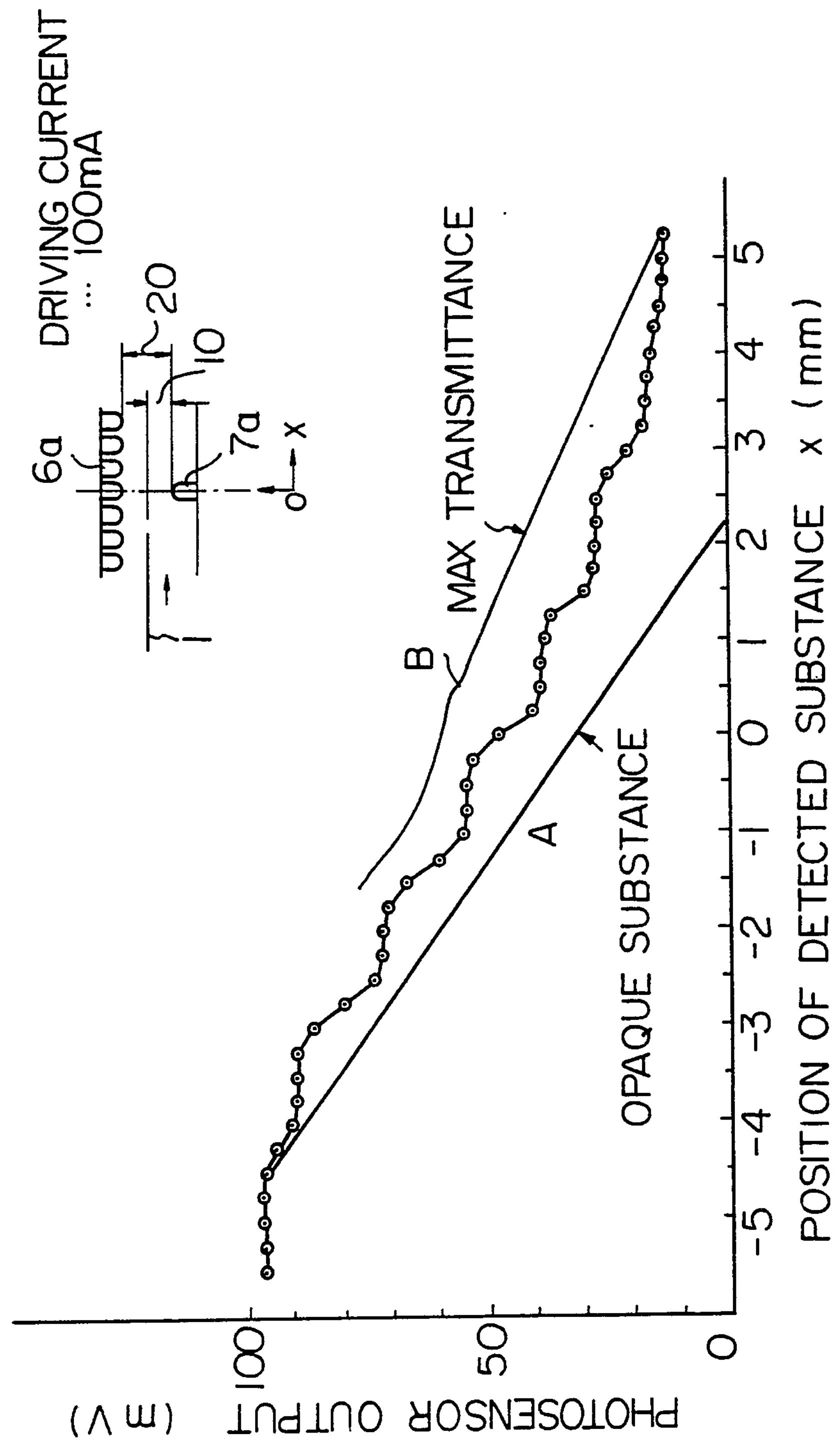
DRIVING CURRENT
... 100mA
6a
20
10
7a
o
x
B
MAX TRANSMITTANCE
A
OPAQUE SUBSTANCE
PHOTOSENSOR OUTPUT (mV)
100
50
0
-5
-4
-3
-2
-1
0
1
2
3
4
5
POSITION OF DETECTED SUBSTANCE x (mm)

*Fig. 5*

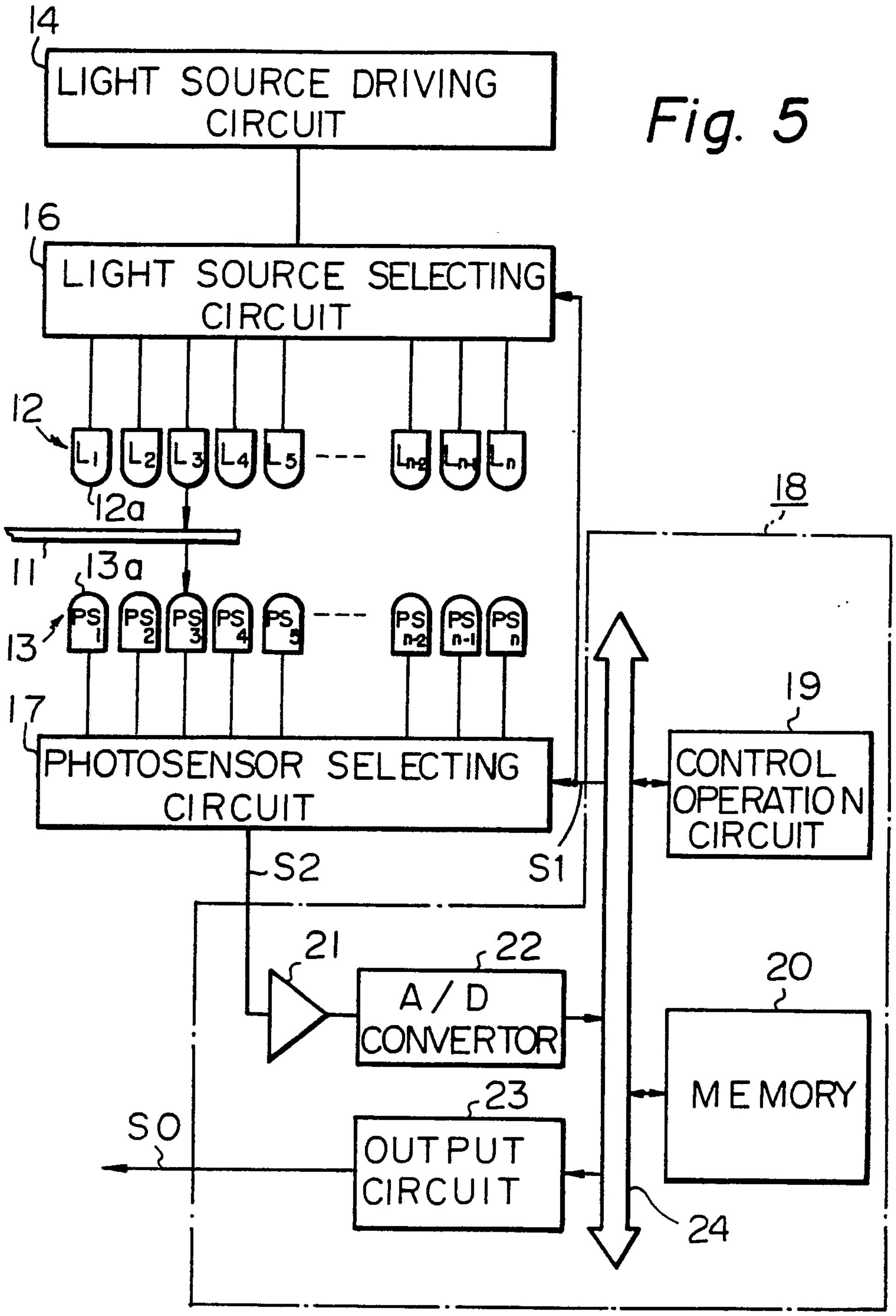
14
LIGHT SOURCE DRIVING CIRCUIT
16
LIGHT SOURCE SELECTING CIRCUIT
12
L1 L2 L3 L4 L5 --- Ln-2 Ln-1 Ln
12a
11
13a
13
PS 1 PS 2 PS 3 PS 4 PS 5 --- PS n-2 PS n-1 PS n
17
PHOTOSENSOR SELECTING CIRCUIT
S2
S1
18
19
CONTROL OPERATION CIRCUIT
21
22
A / D CONVERTOR
20
MEMORY
23
OUTPUT CIRCUIT
SO
24

*Fig. 7*

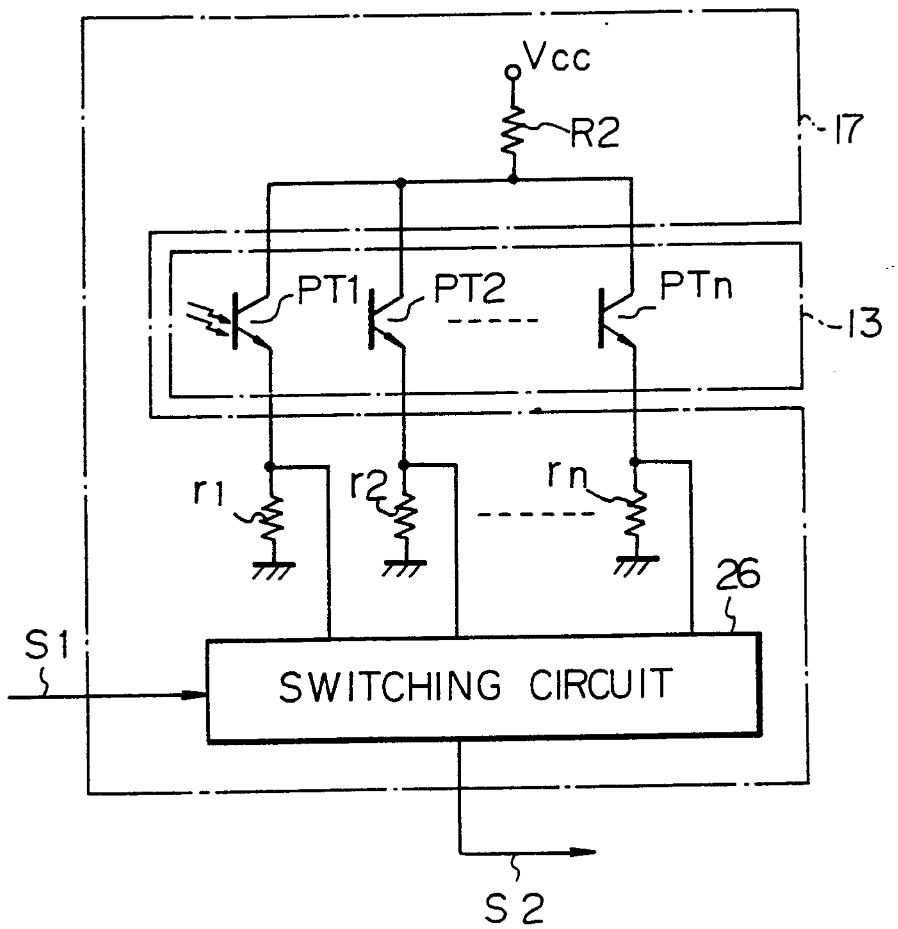

Fig. 8

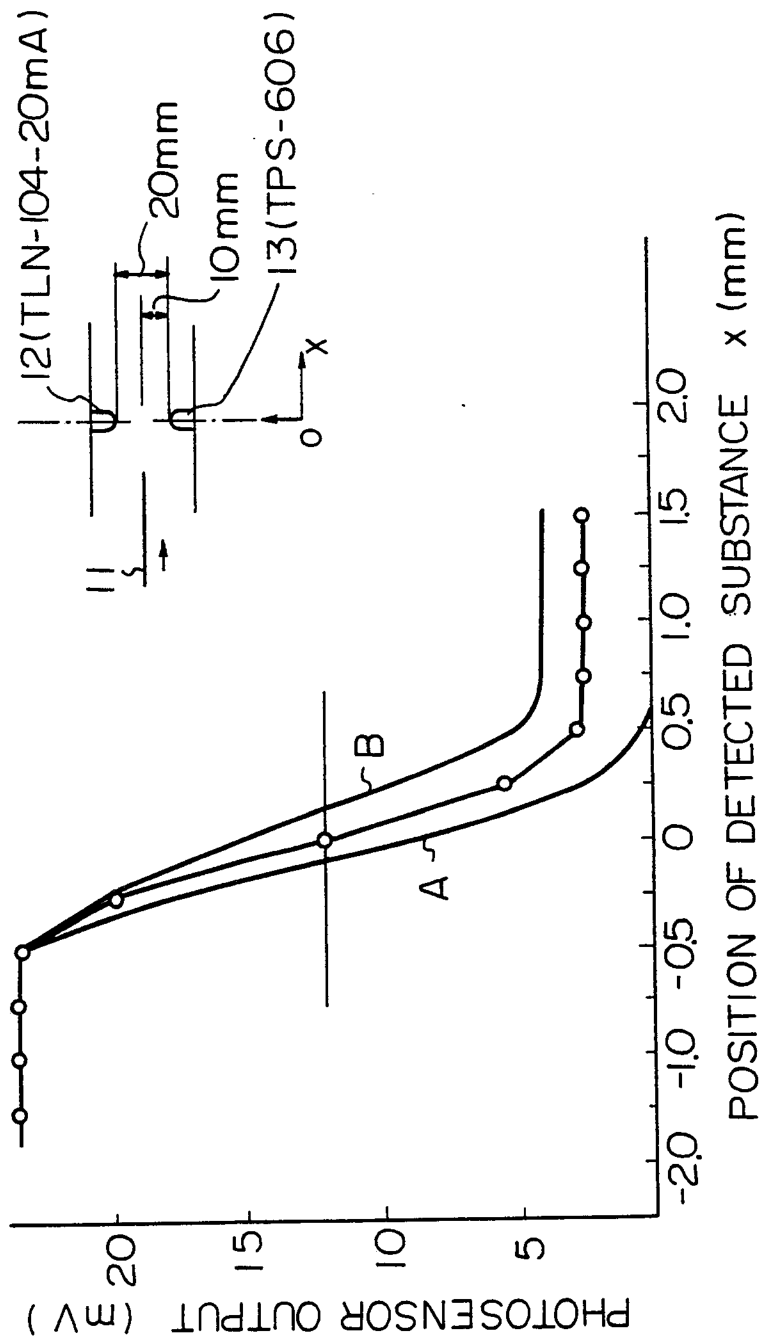
12(TLN-104-20mA)
20mm
10mm
13(TPS-606)
11
x
o
A
B
PHOTOSENSOR OUTPUT (mV)
20
15
10
5
-2.0
-1.0
-0.5
0
0.5
1.0
1.5
2.0
POSITION OF DETECTED SUBSTANCE x (mm)

Fig. 9

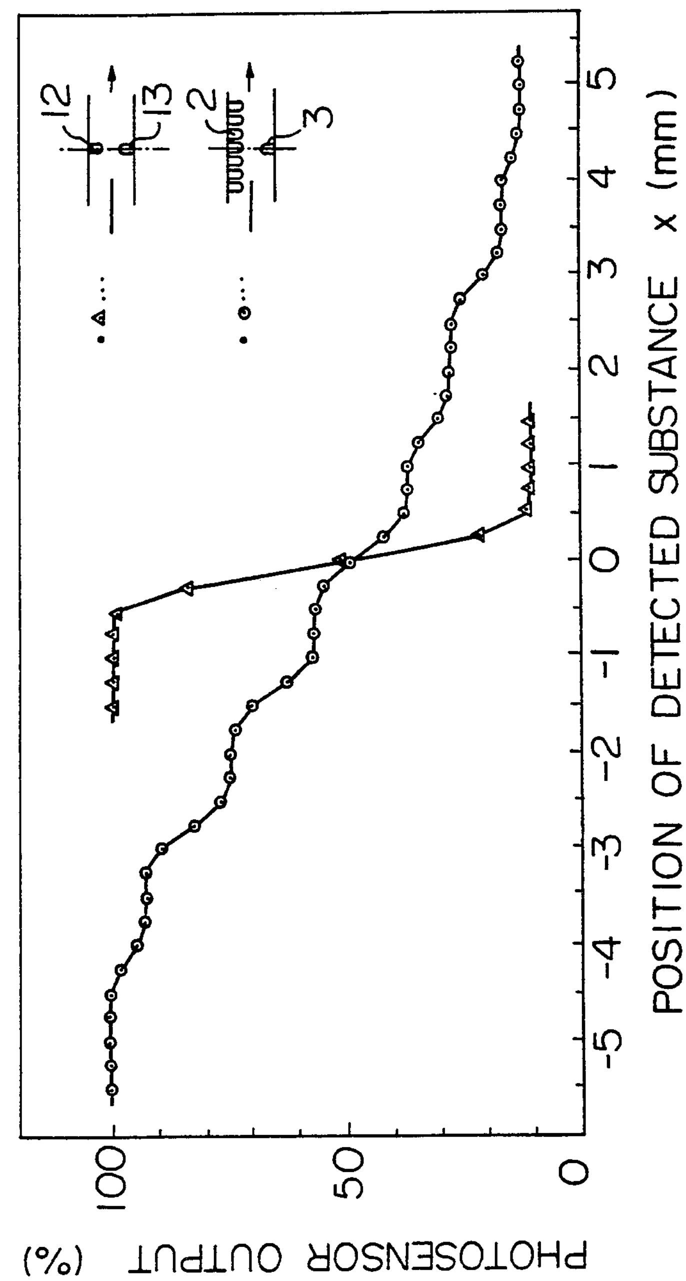
PHOTOSENSOR OUTPUT (%)
100
50
0
POSITION OF DETECTED SUBSTANCE x (mm)
-5
-4
-3
-2
-1
0
1
2
3
4
5
12
13
2
3

Fig. 10

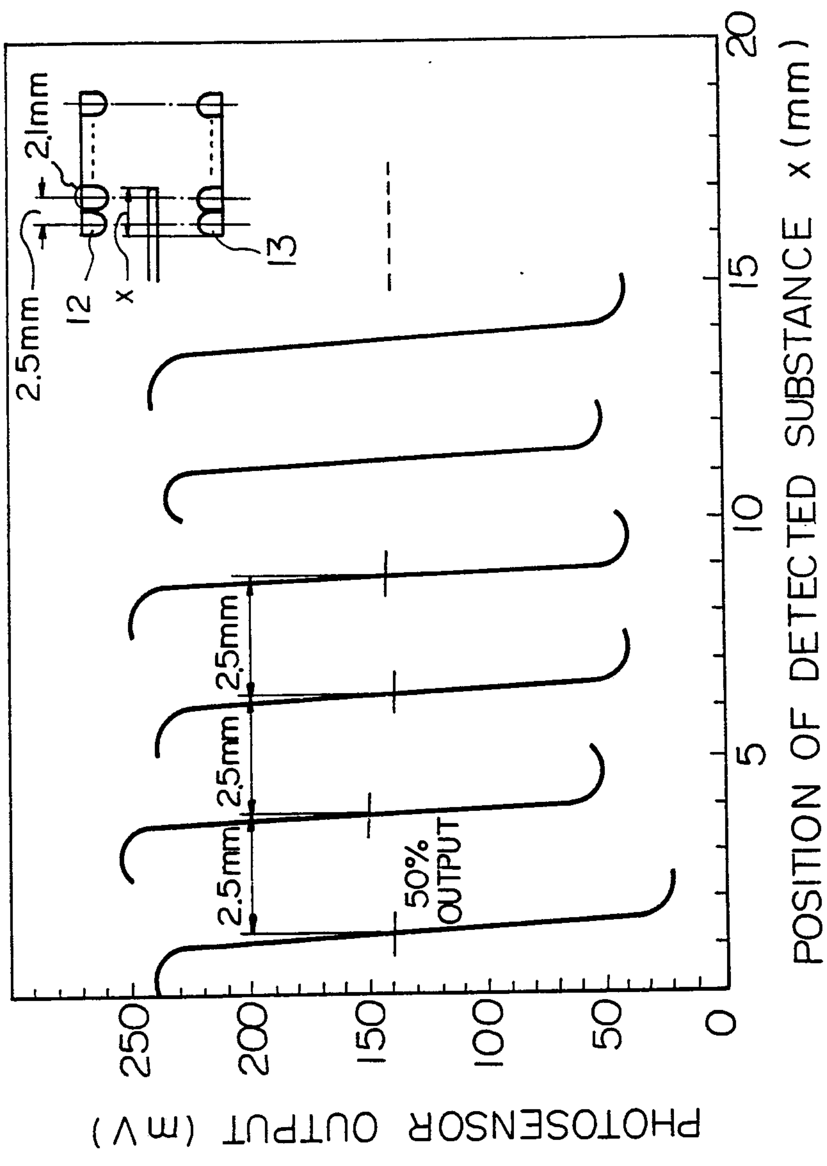
2.5mm
2.1mm
12
x
13
2.5mm
2.5mm
2.5mm
50% OUTPUT
0
5
10
15
20
POSITION OF DETECTED SUBSTANCE x (mm)
0
50
100
150
200
250
PHOTOSENSOR OUTPUT (mV)

Fig. 11

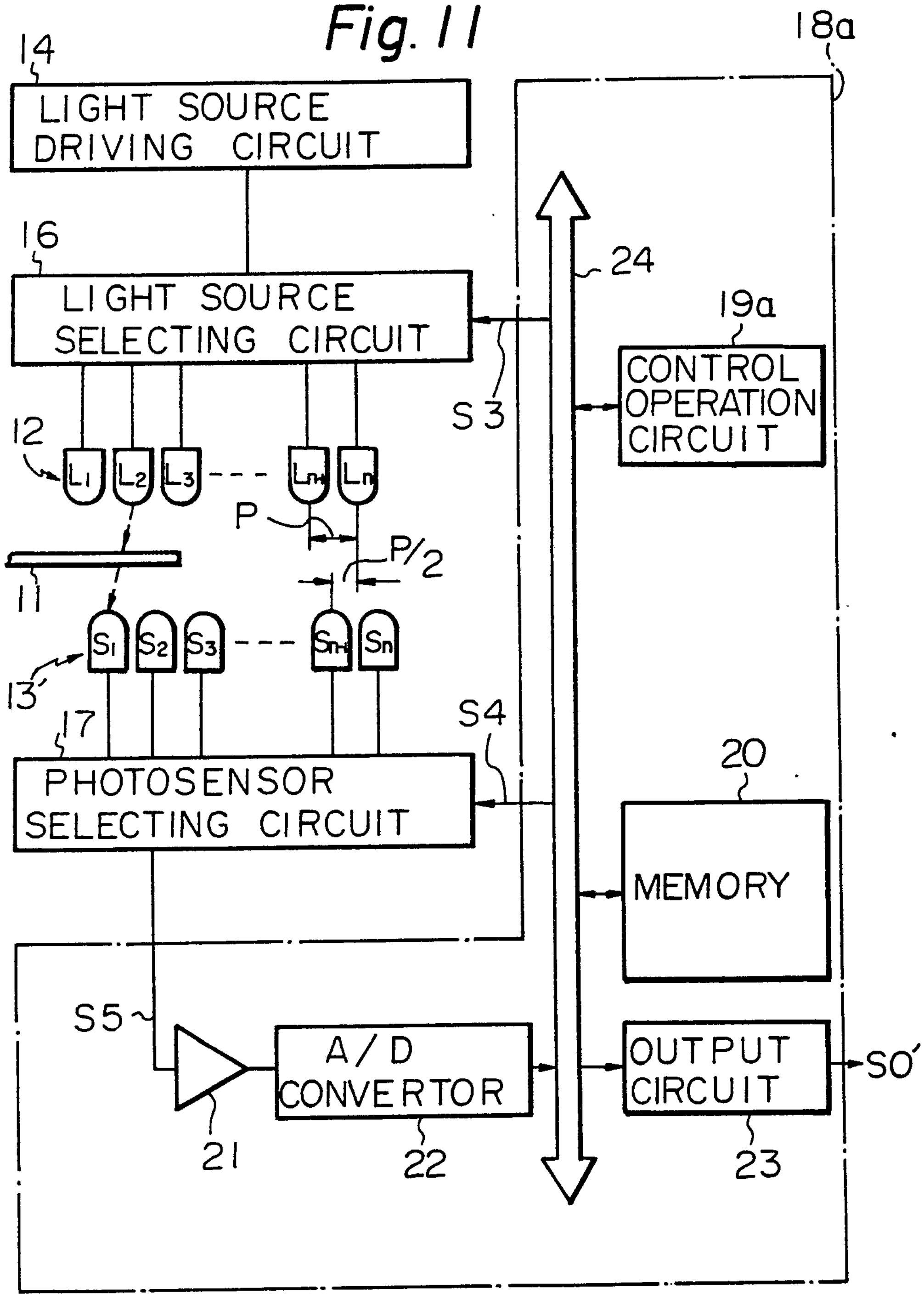
14
LIGHT SOURCE DRIVING CIRCUIT
16
LIGHT SOURCE SELECTING CIRCUIT
18a
24
19a
CONTROL OPERATION CIRCUIT
S3
12
L1
L2
L3
Ln-1
Ln
P
P/2
11
S1
S2
S3
Sn-1
Sn
13
17
S4
PHOTOSENSOR SELECTING CIRCUIT
20
MEMORY
S5
A/D CONVERTOR
OUTPUT CIRCUIT
SO'
21
22
23

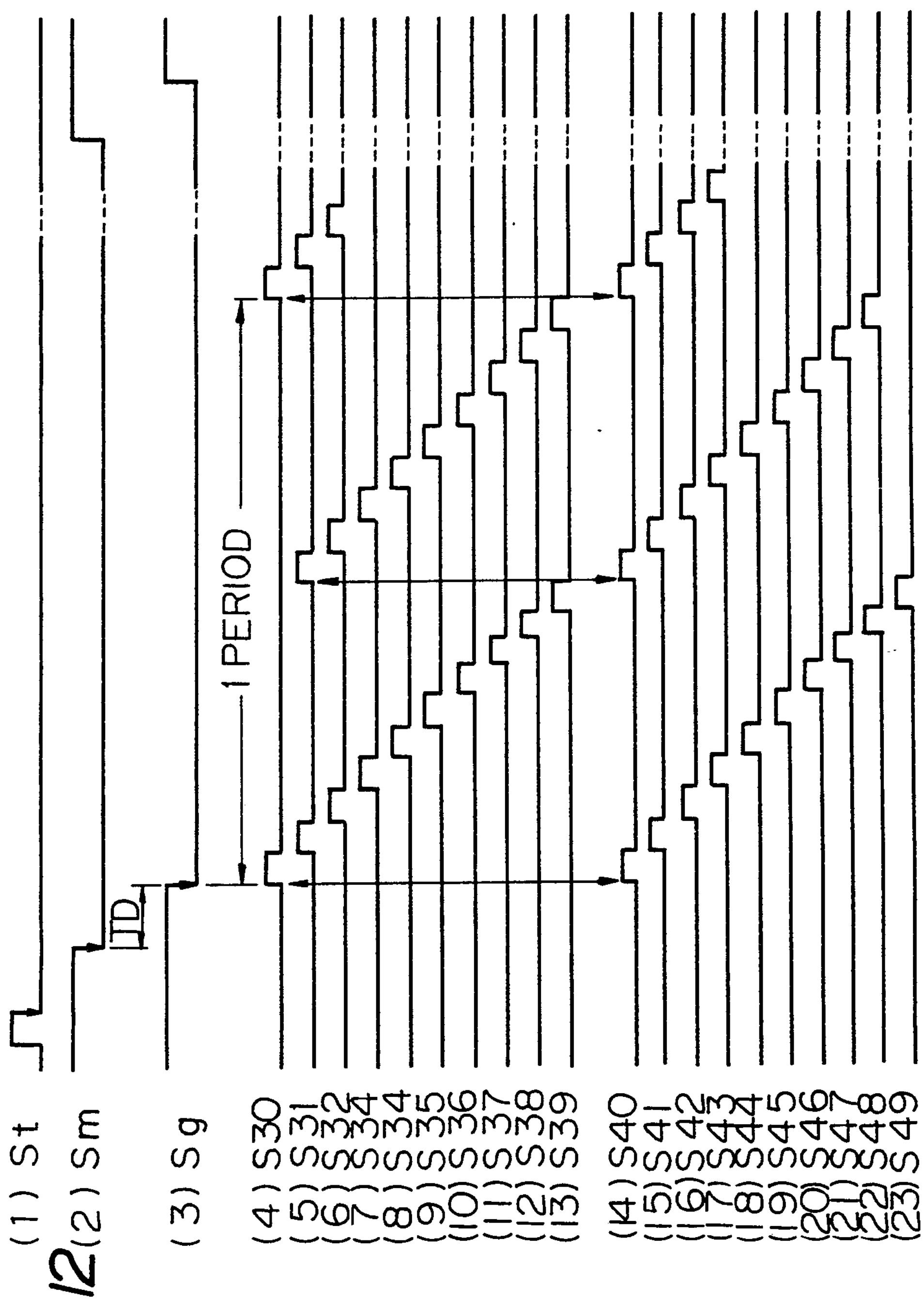
(1) St
(2) Sm
(3) Sg
(4) S30
(5) S31
(6) S32
(7) S34
(8) S34
(9) S35
(10) S36
(11) S37
(12) S38
(13) S39
(14) S40
(15) S41
(16) S42
(17) S43
(18) S44
(19) S45
(20) S46
(21) S47
(22) S48
(23) S49
TD
1 PERIOD

Fig. 12

Fig. 13

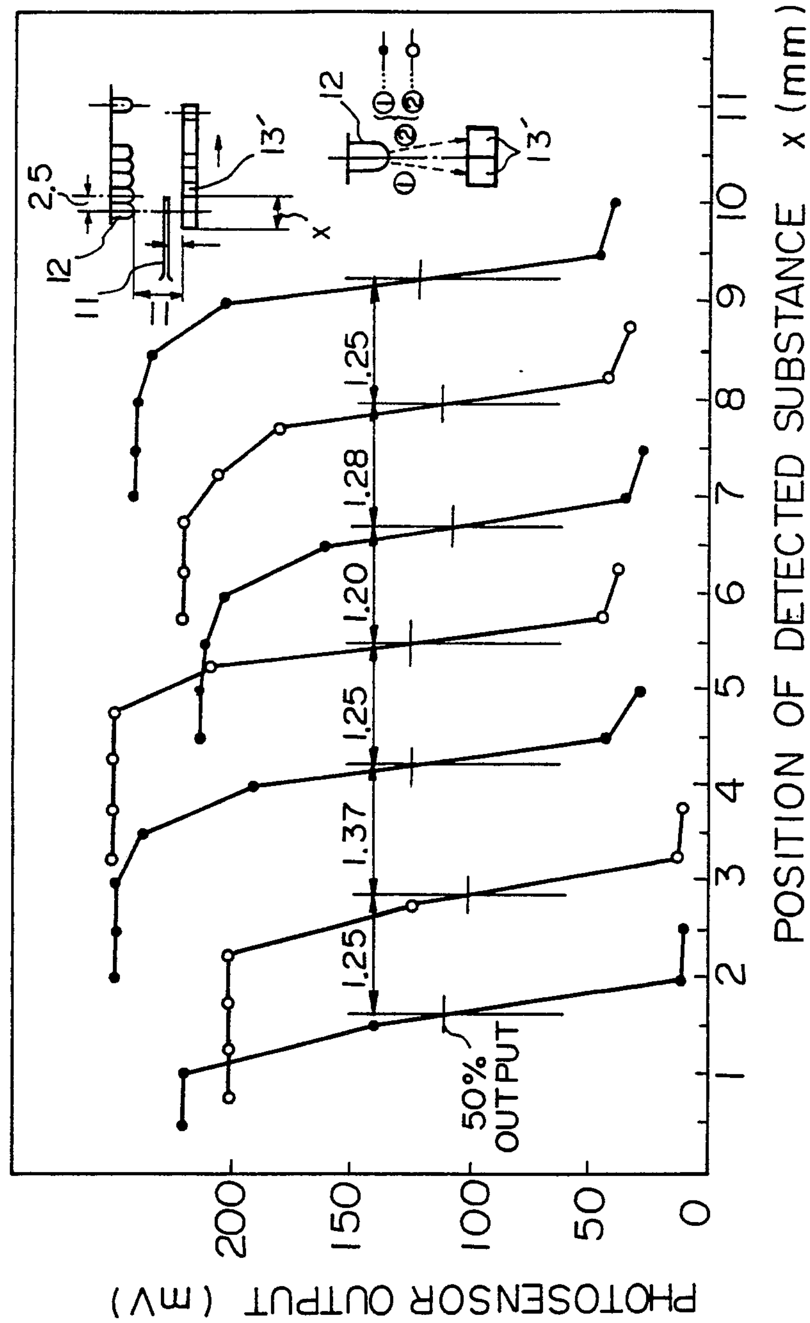
PHOTOSENSOR OUTPUT (mV)
200
150
100
50
0
POSITION OF DETECTED SUBSTANCE x (mm)
1
2
3
4
5
6
7
8
9
10
11
50% OUTPUT
1.25
1.37
1.25
1.20
1.28
1.25
2.5
12
11
13'
x

Fig. 14

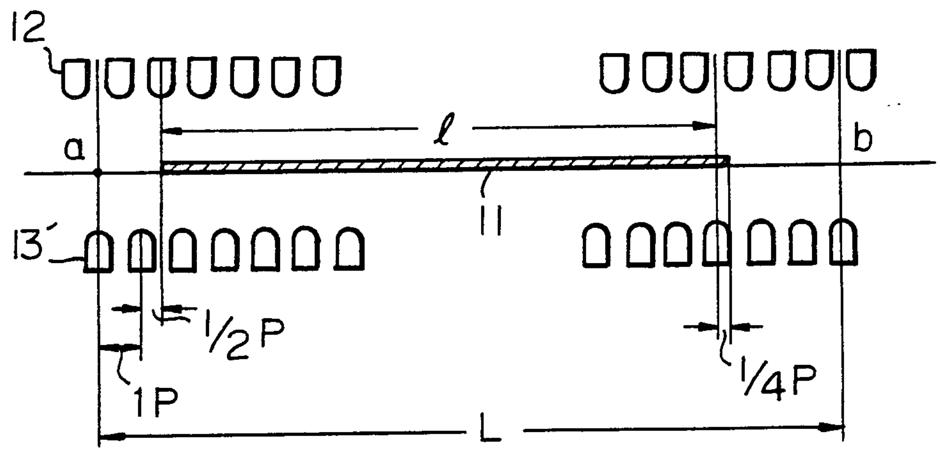

Fig. 15

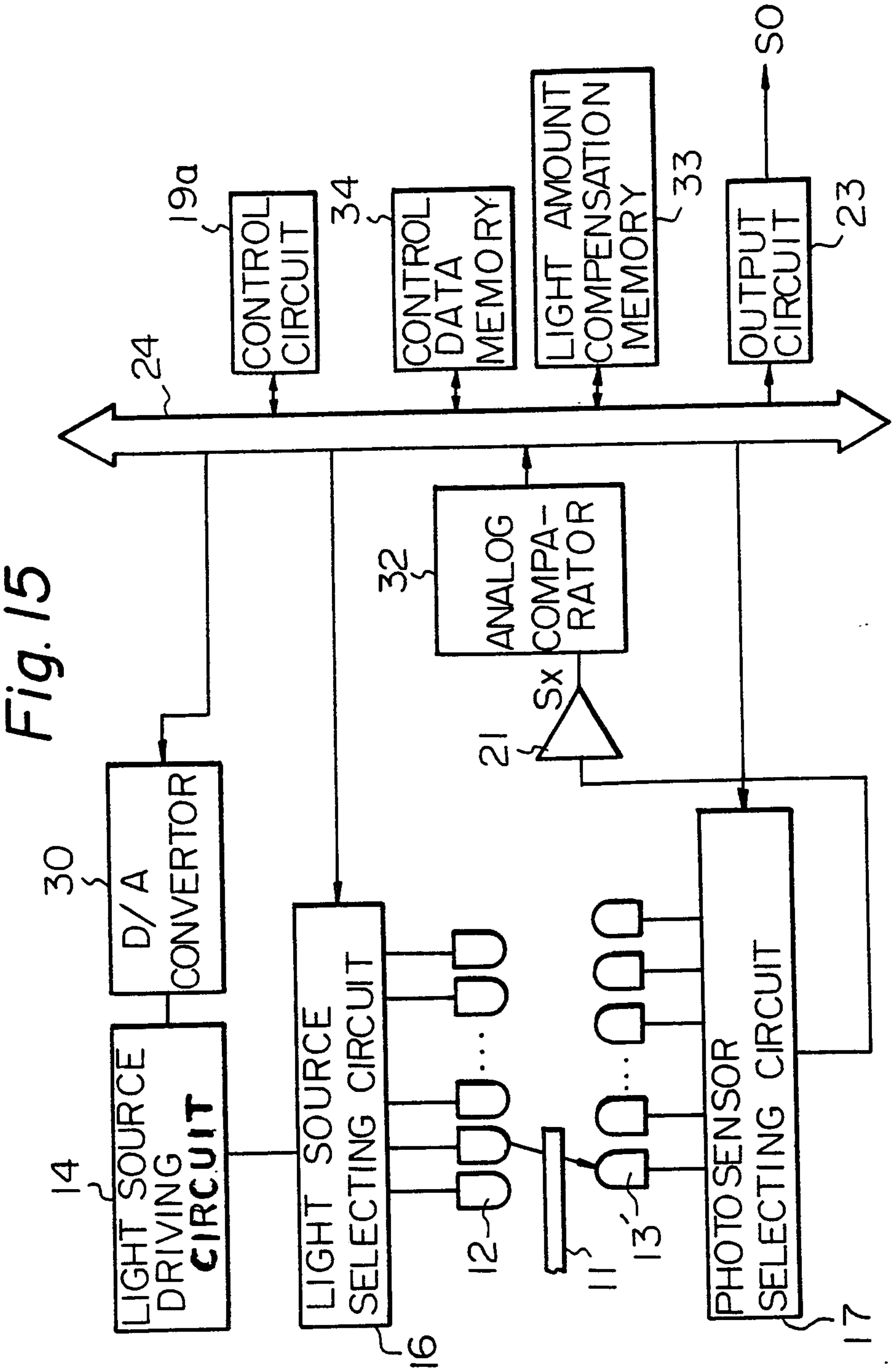

LIGHT SOURCE DRIVING CIRCUIT
14
D/A CONVERTOR
30
LIGHT SOURCE SELECTING CIRCUIT
16
12
11
13'
PHOTOSENSOR SELECTING CIRCUIT
17
21
Sx
ANALOG COMPA-RATOR
32
24
CONTROL CIRCUIT
19a
CONTROL DATA MEMORY
34
LIGHT AMOUNT COMPENSATION MEMORY
33
OUTPUT CIRCUIT
23
SO

Fig. 16 A

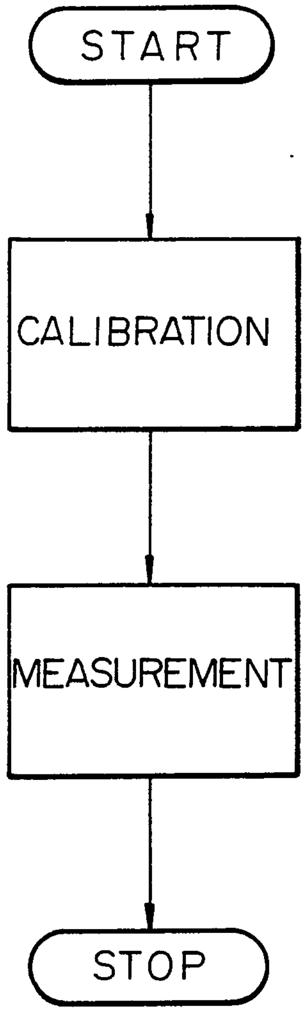

Fig. 16B

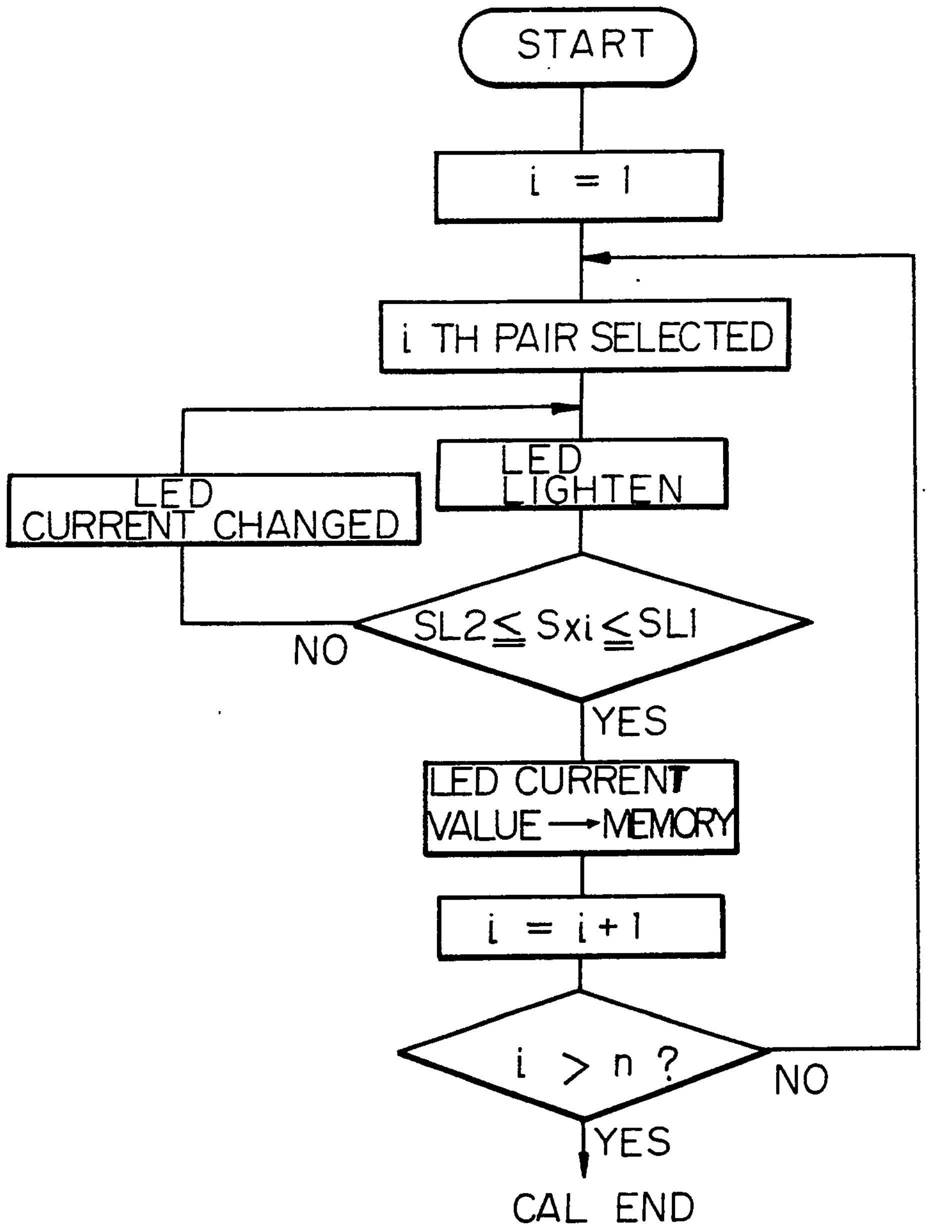
START
i = 1
i TH PAIR SELECTED
LED
LIGHTEN
LED
CURRENT CHANGED
SL2≦Sxi≦SL1
NO
YES
LED CURRENT
VALUE→MEMORY
i = i+1
i > n ?
NO
YES
CAL END

Fig. 16C

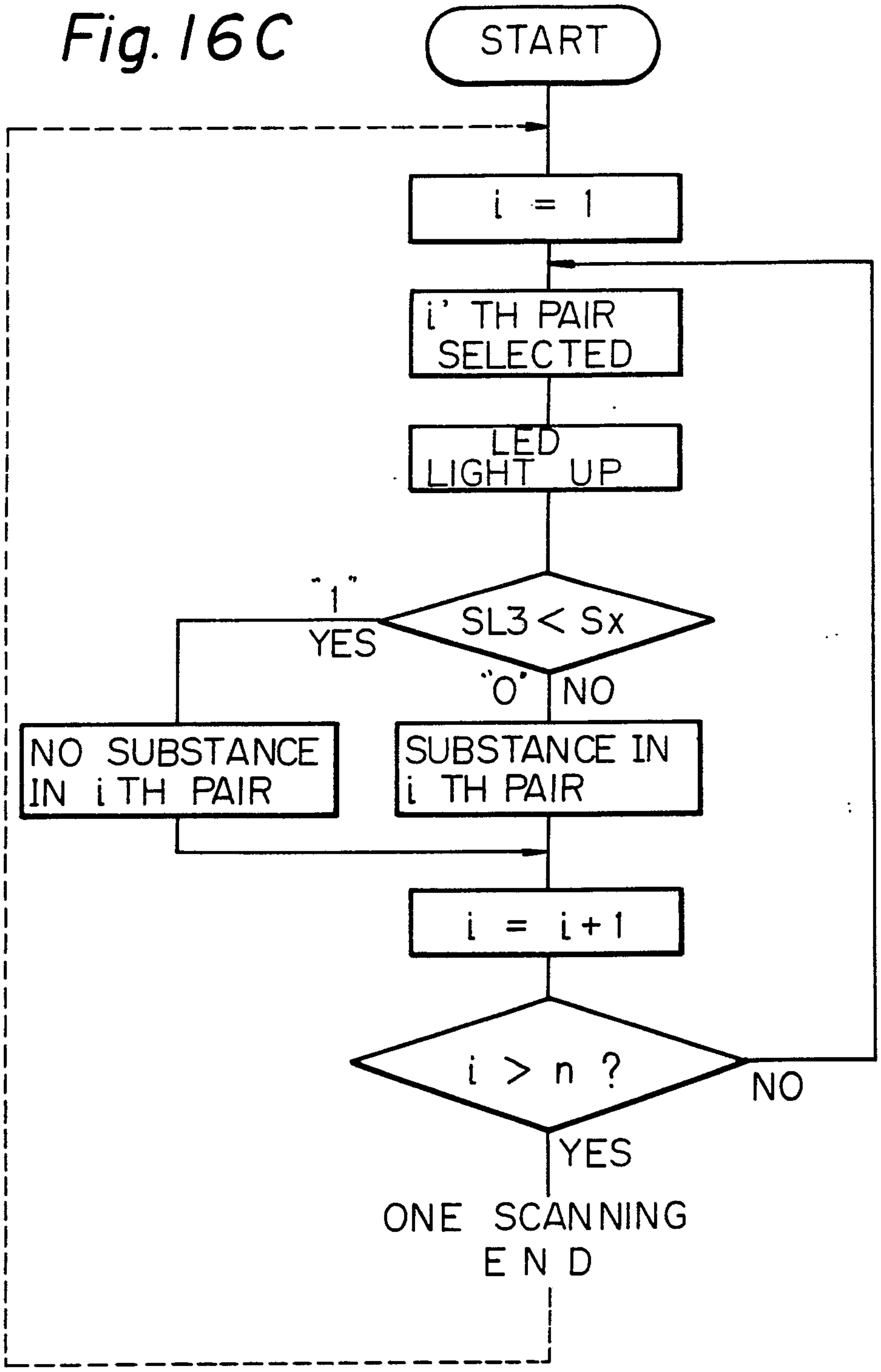
START
i = 1
i' TH PAIR SELECTED
LED LIGHT UP
SL3 < Sx
"1" YES
"0" NO
NO SUBSTANCE IN i TH PAIR
SUBSTANCE IN i TH PAIR
i = i+1
i > n ?
NO
YES
ONE SCANNING END